# EUROPEAN PATENT SPECIFICATION

(11) **EP 2 677 430 B1**
(45) Date of publication and mention of the grant of the patent: **07.01.2015**
(21) Application number: 13168518.2
(22) Date of filing: 21.05.2013
(51) Int. Cl.: G06F 11/20

(54) **Relay device, connection management method, and information communication system**
Relaisvorrichtung, Verbindungsverwaltungsverfahren und Informationsübertragungssystem
Dispositif de relais, procédé de gestion de connexion et système de communication d'informations

(30) Priority: 28.05.2012 JP 2012121049
(43) Date of publication of application: 25.12.2013
(73) Proprietor: FUJITSU LIMITED, Kawasaki-shi, Kanagawa 211-8588 (JP)
(72) Inventor: Otaka, Atsuhiro, Kanagawa, 211-8588 (JP); Katano, Atsushi, Kanagawa, 211-8588 (JP); Honjo, Nobuyuki, Kanagawa, 211-8588 (JP)
(74) Representative: Hoffmann Eitle

(56) References cited:
- EP-A2- 1 840 746
- EP-A2- 2 107 449
- US-A1- 2010 064 086

## Description

### FIELD

The embodiment discussed herein is related to a connection of appliances between information communication devices.

### BACKGROUND

A storage system in which SAS (Serial Attached SCSI) expanders are connected in multiple stages to a backend interface and a plurality of storage devices are connected via the SAS expanders is known.

The storage system includes a plurality of storage devices for storing data, and a controller for controlling an access to the plurality of storage devices.

The controller controls an access to the storage devices in response to a process request or a data input/output request, which is transmitted from a host computer connected to the storage system. Moreover, the controller is connected to the storage devices via the SAS expanders arranged in multiple stages. Connection paths are made in duplicate. Therefore, even if a fault occurs on either of the paths, the system can be continuously operated by using the other path.

In such a storage system, a method for issuing an information frame called BROADCAST (CHANGE) (hereinafter abbreviated to BC (CHG)) is known as a method for rebuilding a configuration when a topology of a backend connection is changed.

In this method, a flow of a process executed when an SAS path is disconnected is, for example, as follows.

An SAS expander issues BC (CHG) to a higher-level expander or a controller upon detecting that the SAS path has been disconnected, for example, due to an occurrence of an error while a command is being transmitted. The SAS expander that has received the BC (CHG) transfers the BC (CHG) to a higher-level SAS expander or a controller. The SAS expander that has received the BC (CHG) executes a discovery process (Self-Discovery) executed to learn a connection state of a subordinate device. Thereafter, the controller executes a discovery process (Discovery). The controller retries the command by using a port to which a normal SAS path is connected upon recognizing the disconnection of the SAS path as a result of the discovery process.

In the meantime, a method for changing a connection configuration of SAS expanders to bypass a faulty path when a fault occurs on the SAS path is known as another configuration rebuilding method. With this method, a controller manages a state of each switch device, and determines whether or not to connect an SAS path between expanders.

Document EP 2 107 449 A describes a storage system including a first storage subsystem having a first logical volume to be accessed by a host computer, and a second storage subsystem connected to the first storage subsystem and having a second logical volume to be mapped to the first logical volume. The first storage subsystem includes a memory having definition information for defining a plurality of logical paths that transfer, to the second logical volume, I/O from the host computer to the first logical volume, and a transfer mode of the I/O to the plurality of logical paths. At least two or more logical paths among the plurality of logical paths are defined as active, and the controller transfers the I/O to the at least two or more logical paths set as active.

Document EP 1 840 746 A describes a computer system including at least one host computer; and at least one storage system, characterized in that: the storage system has a disk drive and a disk controller, and provides a storage area of the disk drive as at least one logical unit; upon detecting a failure in a logical path serving as an access route from the host computer to the logical unit, the host computer specifies logical paths for accessing the same logical unit that is connected to the logical path where the failure is detected; the host computer executes failure detecting processing for the specified logical paths to judge whether the specified logical paths are normal or not; the host computer selects normal logical paths out of the specified logical paths; and the host computer accesses the logical unit via the normal logical paths selected.

Document US 2010/064086 describes a method, wherein a failed link is detected between a first SAS expander and a device. A data transfer of the first SAS expander connected to the device via the failed link is re-routed to a second SAS expander connected to the device via a functional link. The first SAS expander is connected to the SAS expander via the phys of the first SAS expander and the phys of the second SAS expander for inter-expander communications.

Techniques referred to in the following documents are known.
Document 1: Japanese Laid-open Patent Publication No. 2009-187483
Document 2: Japanese Laid-open Patent Publication No. 2010-61664

However, if a controller manages connection states of relay devices and changes a connection configuration of the relay devices so as to bypass a faulty path when a fault occurs on the path, a load imposed on the controller increases.

### SUMMARY

In one aspect, the present invention, which is defined in detail in the appended independent claims 1, 6 and 11, aims at lightening a load imposed on a controller in an information communication system where a path configuration is rebuilt to bypass a faulty path when a fault occurs on the path.

According to an aspect of the embodiment, a relay device for relaying a communication between information communication devices includes a detection unit, a communication state obtaining unit, and a path connection unit. The detection unit detects a change in a first communication state between a local device and a first relay device that is arranged in a stage preceding or succeeding the local device and connected to the local device with a logical path. The communication state obtaining unit obtains, from a second relay device for relaying a logical path different from the logical path relayed by the local device, a second communication state between the second relay device and a third relay device that is arranged in a stage preceding or succeeding the second relay device and connected to the second relay device with a logical path. The path connection unit enables a logical path between the local device and the second relay device according to a combination of the first and the second communication states when the detection unit detects the change in the first communication state.

### BRIEF DESCRIPTION OF DRAWINGS

FIG. 1 illustrates one example of a relay device according to an embodiment.
FIG. 2 illustrates one example of a configuration of a storage system according to the embodiment.
FIG. 3 illustrates one example of details of the configuration of the storage system according to the embodiment.
FIG. 4 illustrates one example of a configuration of an expander chip in the storage system according to the embodiment.
FIG. 5 illustrates one example of a configuration of a device enclosure in the storage system according to the embodiment.
FIG. 6 is an explanatory diagram of a state of the storage system when a fault occurs on an SAS path in a case where an inter-system SAS path is not connected.
FIGS. 7A and 7B are explanatory diagrams of operations performed when an SAS path between DEs is disconnected in the embodiment.
FIG. 8 is an explanatory diagram of a one-system 1-path disconnection between DEs.
FIG. 9 is an explanatory diagram of a one-system 1-path disconnection between DEs.
FIG. 10 is an explanatory diagram (No. 1) of a one-system 2-path disconnection between DEs.
FIGS. 11A and 11B illustrate explanatory diagrams (No. 2) of a one-system 2-path disconnection between DEs.
FIG. 12 is an explanatory diagram of a fault of a one-system expander.
FIG. 13 is an explanatory diagram of a both-system 2-path disconnection between DEs.
FIG. 14 is an explanatory diagram (No. 1) of a both-system 2-path disconnection between different DEs.
FIGS. 15A and 15B are explanatory diagrams (No. 2) of a both-system 2-path disconnection between different DEs.
FIG. 16 illustrates one example of a data structure of an expander connection management table in the embodiment.
FIG. 17 illustrates one example of a data structure of a connection expander SAS address management table in the embodiment.
FIG. 18 illustrates one example of expander connection notification information in the embodiment.
FIG. 19 illustrates one example of expander connection reply information in the embodiment.
FIG. 20 illustrates one example of an inter-system connection matrix in the embodiment.
FIG. 21 is a flowchart illustrating operations of an expander in a loop check as one example of the embodiment.
FIG. 22 is a flowchart illustrating operations of the entire storage system when an SAS input/output port is changed as one example of the embodiment.
FIG. 23 is a flowchart illustrating operations of a process executed by an expander when a change in an SAS input/output port is detected as one example of the embodiment.
FIG. 24 is a flowchart illustrating operations of a BC (CHG) issuance check as one example of the embodiment.
FIG. 25 is a flowchart illustrating operations of an expander when expander connection notification information is received as one example of the embodiment.

### DESCRIPTION OF EMBODIMENTS

A Preferred embodiment of the present invention will be explained with reference to accompanying drawings.

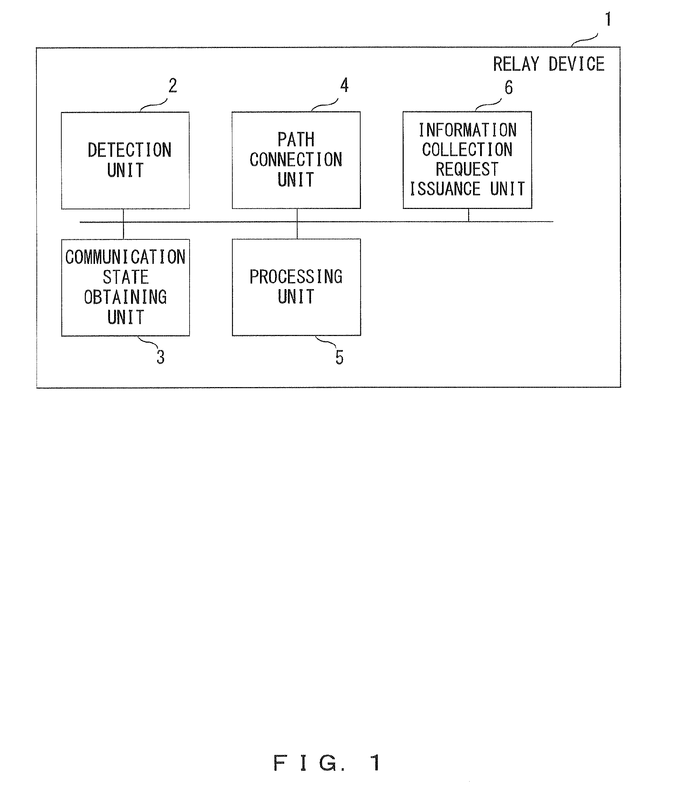

FIG. 1 illustrates one example of a relay device according to an embodiment.

The relay device 1 relays a communication between information communication devices. The relay device 1 includes a detection unit 2, a communication state obtaining unit 3, a path connection unit 4, a processing unit 5, and an information collection request issuance unit 6.

The detection unit 2 detects a change in a first communication state between the local device 1 and a first relay device 1 that is arranged in a stage preceding or succeeding the relay device 1 and connected to the local device 1 with a logical path.

The communication state obtaining unit 3 obtains, from a second relay device 1 that relays a logical path different from the logical path relayed by the local device 1, a second communication state between the second relay device 1 and a third relay device 1 that is arranged in a stage preceding or succeeding the second relay device 1 and connected to the second relay device 1 with a local path.

The path connection unit 4 enables the logical path between the relay device 1 and the second relay device 1 according to a combination of the first and the second communication states when the detection unit 2 has detected a change in the first communication state. The path connection unit 4 also enables the logical path between the local device 1 and the second relay device 1 according to a state of a third communication between the first relay device 1 and a fourth relay device 1 that relays a logical path different from the logical path relayed by the first relay device 1.

The processing unit 5 executes a process for issuing a notification of enabling the logical path between the local device 1 and the second relay device 1 to a fifth relay device 1 arranged between the information communication devices. Upon receipt of the notification from a different relay device 1, the processing unit 5 of the fifth relay device 1 enables a logical path between the fifth relay device 1 and a sixth relay device 1 for relaying a logical path different from the logical path relayed by the fifth relay device 1.

The information collection request issuance unit 6 issues, to a seventh relay device 1 arranged between information communication devices, an information collection request to collect a fourth communication state between the seventh relay device 1 and an eighth relay device 1 that is arranged in a stage preceding or succeeding the seventh relay device 1 and connected to the seventh relay device 1 with a logical path according to a change in the first communication state when the change in the first communication state is detected.

The information collection request issuance unit 6 collects information and prevents BC (CHG) from being issued according to a change in a communication state, whereby the number of times that the discovery processes are executed by a different relay device 1 and the controller can be minimized. As a result, a load imposed on an SAS path can be lightened.

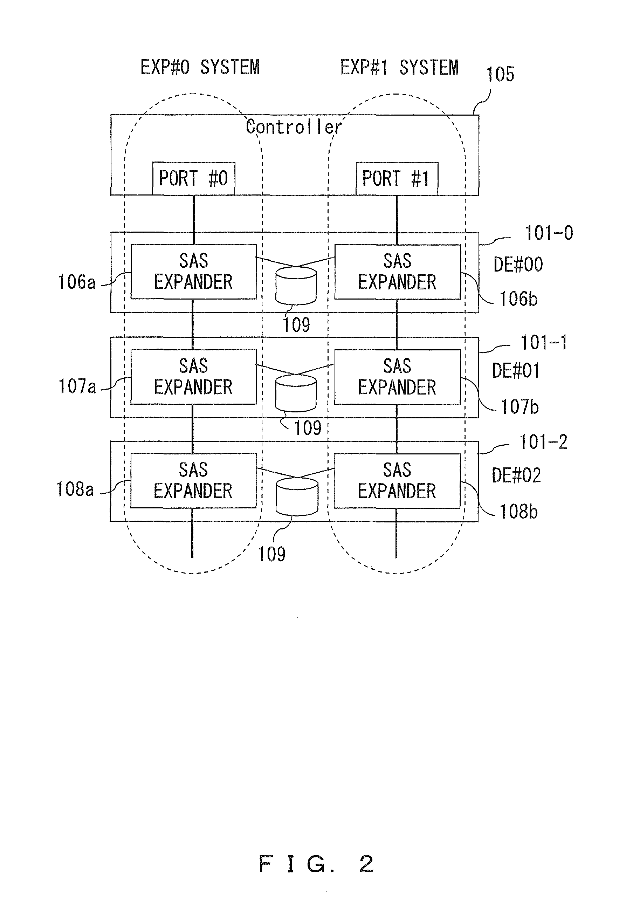

FIG. 2 illustrates one example of a storage system according to the embodiment using SAS expanders for a backend connection.

The storage system 100 is, for example, a RAID (Redundant Arrays of Inexpensive Disks) system that includes a plurality of HDDs (Hard Disk Drives) and can handle the plurality of HDDs as one logic volume.

The storage system 100 includes a controller 105, and one or more device enclosures (hereinafter abbreviated to DEs) 106. The controller 105 controls storage devices 109 according to a process request or a data input/output request, which is transmitted from a host computer (not illustrated) connected to the storage system. DE #00 (101-0) includes SAS expanders 106a and 106b, to which one or more storage devices 109 are connected. Similarly, DE #01 (101-1) includes SAS expanders 107a and 107b, to which one or more storage devices 109 are connected. Moreover, DE #02 (101-2) includes SAS expanders 108a and 108b, to which one or more storage devices 109 are connected.

The controller 105 includes two ports such as Port #0 and Port #1. Port #0 is connected to the expander 106a of DE #00 via an SAS cable, whereas Port #1 is connected to the expander 106b of DE #00 via an SAS cable.

The SAS expanders are connected in multiple stages in series. Namely, the expander 106a of DE #00 is connected to the expander 107a of DE #01, whereas the expander 106b of DE #00 is connected to the expander 107b of DE #01. Similarly, the expander 107a of DE #01 is connected to the expander 108a of DE #02, whereas the expander 107b of DE #01 is connected to the expander 108b of DE #02.

Both of the SAS expanders connected to the controller 105, and a group of SAS expanders connected to the SAS expander in multiple stages in series are referred to as an EXP#0 system. In contrast, the other SAS expander connected to the controller 105, and a group of SAS expanders connected to the SAS expander in multiple stages in series, are referred to as anEXP#l system.

The controller 105 can be cited as one example of a controller. Moreover, the SAS expanders can be cited as one example of the relay device 1. Additionally, the storage devices 109 can be cited as one example of a storage unit.

In the example of FIG. 2, the SAS expanders 106, 107a and 108a are the EXP#0 system, whereas the SAS expanders 106b, 107b and 108b are the EXP#1 system.

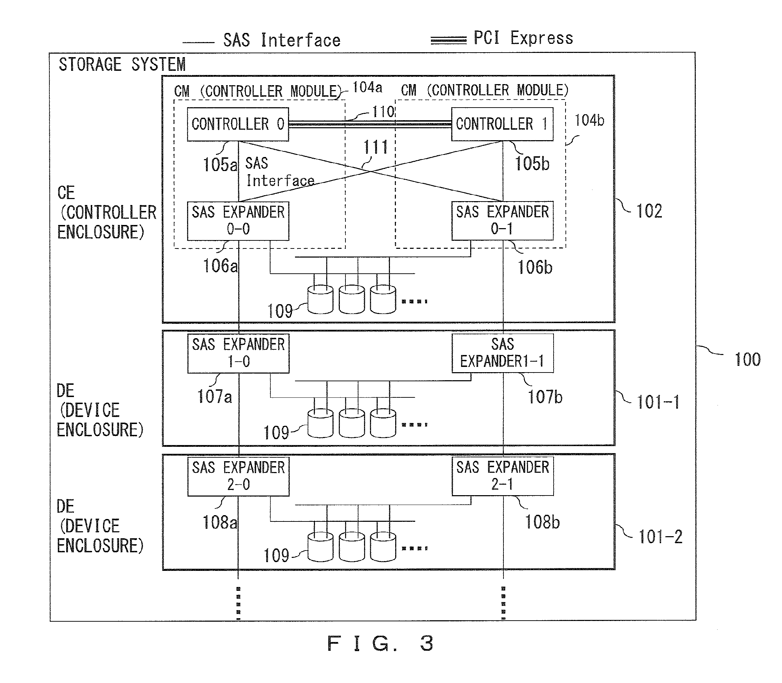

FIG. 3 illustrates one example of details of the configuration of the storage system according to this embodiment.

The storage system 100 includes a controller enclosure (hereinafter abbreviated to CE) 102, and one or more DEs 101 (101-2 ...). To the CE 102, one or more DEs 101 are connected in multiple stages in series. Namely, the DE 101-1 is connected to the CE 102, and the DE 101-2 is connected to the DE 101-1. Moreover, the storage system 100 is connected to a host computer (not illustrated) as a higher-level device, and the host computer issues a process request or a data input/output instruction to the storage system.

The CE 102 includes a plurality of controller modules (hereinafter abbreviated to CMs) 104. The CMs 104 perform various controls in the storage system, and perform a control for an access to the storage devices 109 based on an I/O command transmitted from the host computer.

The CM 104a includes the controller 105a and the SAS expander 106a. The CM 104b includes the controller 105b and the SAS expander 106b. The controllers 105a and 105b respectively perform various types of controls in the CMs 104a and 104b. The SAS expanders 106a and 106b, and the SAS expanders 107a, 107b, 108a, and 108b, which will be described later, perform the control for an access to a connected storage device 109 based on an access command transmitted from the controllers 105a and 105b.

The controller 105a is connected to the SAS expanders 106a and 106b via an SAS cable 111. Similarly, the controller 105b is connected to the SAS expanders 106a and 106b via an SAS cable 111. To the SAS expanders 106a and 106b, one or more storage devices 109 are connected. Moreover, the controllers 105a and 105b are connected via a bus such as PCI Express 110 or the like.

The DE 101-1 includes the SAS expanders 107a and 107b, to which one or more storage devices 109 are connected. The storage devices 109 are respectively connected to the SAS expanders 107a and 107b. Access paths from the CM 104 to the storage device 109 are made in duplicate.

Similarly to the DE 101-1, the DE 101-2 includes the SAS expanders 108a and 108b, to which one or more storage devices 109 are connected. The storage devices 109 are respectively connected to the SAS expanders 108a and 108b, and access paths extending from the CM 104 to the storage devices 109 are made in duplicate.

To the controller 105a, the SAS expanders 106a, 107a and 108a are connected in multiple stages in series. Namely, as illustrated in FIG. 3, the SAS expander 106a is connected to the controller 105a, and the SAS expander 107a is connected to the SAS expander 106a. Moreover, the SAS expander 108a is connected to the SAS expander 107a. Similarly, the SAS expander 106b is connected to the controller 105b, and the SAS expander 107b is connected to the SAS expander 106b. Moreover, the SAS expander 108b is connected to the SAS expander 107b.

In the following description, the controller 105 side is sometimes referred to as a higher-level side on the data paths extending from the controller 105 to the SAS expanders 108.

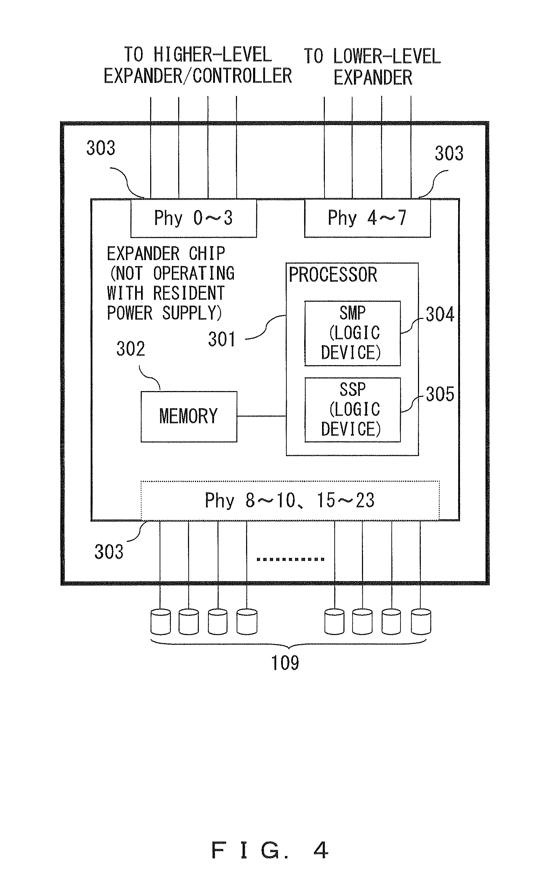

FIG. 4 illustrates a configuration of an expander chip mounted in each SAS expander. The expander chip includes a memory 302, a processor 301, and a Phys (PHYsical) 303.

The memory 302 is intended to store various types of data and programs, and temporarily stores (loads) data and a program when the processor 301 performs various types of computations and controls.

Here, the memory 302 is, for example, a semiconductor memory, and is configured by including a RAM (Random Access Memory) area and a ROM (Read Only Memory) area.

The processor 301 is a computing device for performing various types of computations and controls by executing a program, and implements various types of functions by executing a program stored in the memory 302 or a ROM not illustrated. The processor 301 includes SMP 304 and SSP 305 as illustrated in FIG. 4. The SMP 304 is a logic device based on SMP (Serial Management Protocol), whereas the SSP 305 is a logic device based on SSP (Serial SCSI Protocol).

The SMP 304 is used to manage a point-to-point topology and an enclosure service of an expander. Specifically, the SMP 304 executes a discovery process or the like.

The SSP 305 enables the controller 105 to communicate with an SAS device and existing SCSI software. Specifically, the SSP 305, for example, obtains and controls a state of a DE.

Here, the processor 301 functions as an example of the detection unit 2, the communication state obtaining unit 3, the path connection unit 4, the processing unit 5, and the information collection request issuance unit 6 by executing a program stored in the memory 302, a ROM, or a storage device not illustrated.

The Phy 303 is a physical link port, and includes 24 PHYs 0 to 23 in the example illustrated in FIG. 4. Moreover, in the example illustrated in FIG. 4, the Phys 0 to 3 are used to connect to a higher-level SAS expander or the controller 105. In contrast, the Phys 4 to 7 are used to connect to a lower-level SAS expander, and the PHYs 8 to 10 and 15 to 23 are used to connect to the storage devices 109. A connection destination of each Phy 303 may be arbitrarily changed.

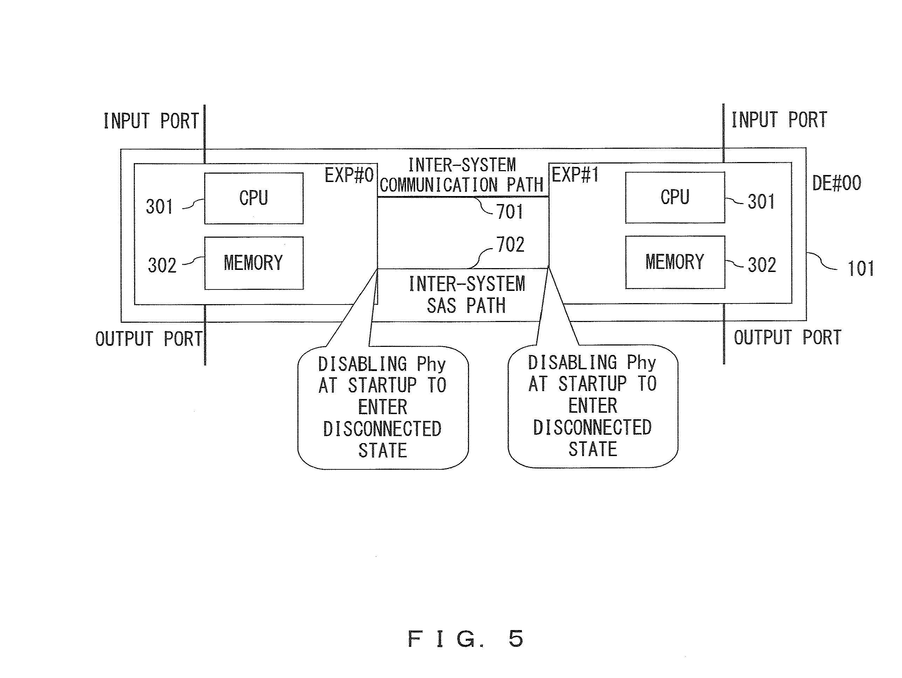

FIG. 5 illustrates one example of a configuration of the DE 101 of the storage system according to the embodiment.

As illustrated in FIG. 5, expanders of the EXP#0 system and the EXP#1 system within the same DE are physically connected with an SAS path and a communication path in this embodiment. In the following description, an SAS path connecting between expanders of the EXP#0 system and the EXP#1 system within the same DE is referred to as an inter-system SAS path 702, whereas a communication path connecting between expanders of the EXP#0 system and the EXP#1 system within the same DE is referred to as an inter-system communication path 701.

The inter-system communication path 701 is used to transfer an instruction transmitted from the controller 105 to the other expander within the same DE. Normally, an LED control, a control of the number of revolutions of a FAN, temperature monitoring and the like are performed on the side of the EXP#0 system. However, these information items are synchronized with one another with the inter-system communication path 701 by taking into account a case where an expander of the EXP#0 system is replaced or becomes faulty. The inter-system communication path 701 is connected, for example, with I2C (Inter-Integrated Circuit) (trademark), Ethernet (registered trademark), or the like.

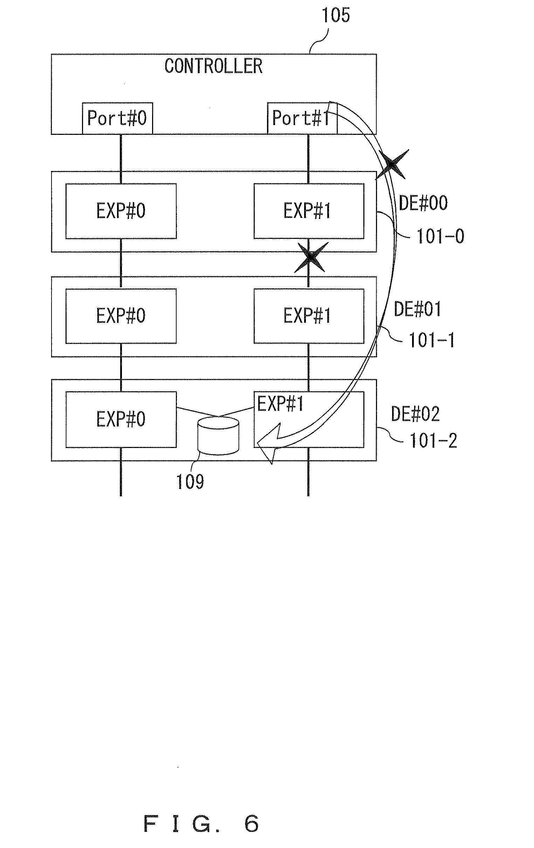

The reason why an inter-system SAS path 702 is connected in the storage system according to this embodiment in this way is described with reference to FIG. 6.

FIG. 6 is an explanatory diagram of a state of the storage system when a fault occurs on an SAS path in a case where an inter-system SAS path 702 is not connected. In FIG. 6, SAS paths of the EXP#0 system and the EXP#1 system are independent from each other. In this case, if the SAS path between DE #00 and DE #01 of the EXP#1 system is disconnected due to a fault, the controller 105 cannot access an SAS expander of the EXP#1 system on a lower-level side than DE #01. Accordingly, the controller 105 accesses storage devices belonging to DE #01 and DE #02 upon recognizing that the SAS path between DE #00 and DE #01 of the EXP#1 system is disconnected based on BC (CHG) from the SAS expander. In this case, if an additional fault occurs on the SAS path of the EXP#0 system, the storage system goes down. Moreover, since an access load concentrates on the SAS path of the EXP#0 system, a throughput is degraded. Due to the above described reasons, an inter-system SAS path 702 is connected in this embodiment.

However, the two independent paths of the EXP#0 system and the EXP#1 system are connected when the inter-system SAS path 702 is continuously connected on standby for an occurrence of a fault on the path. When the two independent paths of the EXP#0 system and the EXP#1 system are connected, a loop occurs. If a loop occurs, the controller 105 and an expander cannot recognize an SAS path. Therefore, the discovery processes are not complete. For this reason, the inter-system SAS path 702 cannot be continuously connected. Therefore, the SAS expander logically controls the connection so that the inter-system SAS path 702 is disabled in a normal state of the SAS path and the inter-system SAS path 702 is enabled when the SAS path has been disconnected.

In this embodiment, the Phy 303 to which the inter-system SAS path 702 is connected can be enabled/disabled by switching between "enable" and "disable". The inter-system SAS path 702 is physically connected with an SAS cable all the time. In a normal state, however, the Phy 303 is disabled. Therefore, the inter-system SAS path 702 is logically disconnected. If the SAS path is disconnected, the processor 301 switches the state of the Phy 303 from "disable" to "enable", so that the inter-system SAS path 702 is connected.

In the following description, an operation for connecting an inter-system SAS path 702 indicates an operation that the processor 301 performs to enable the Phy 303 of the inter-system SAS path 702. Moreover, an operation for disconnecting an inter-system SAS path 702 indicates an operation that the processor 301 performs to disable the Phy 303 of the inter-system SAS path 702. Enabling/disabling the Phy 303 connected to an inter-system SAS path 702 is sometimes referred to as enabling/disabling of the inter-system SAS path 702.

SAS addresses of ports of storage devices are different in the EXP#0 system and the EXP#1 system. Therefore, paths are configured to be accessible from an original system when being reconfigured.

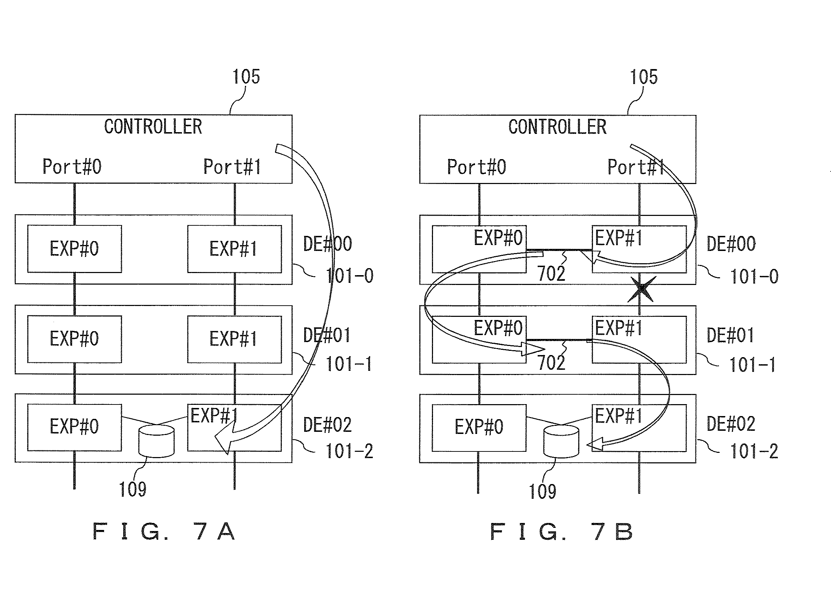

FIGS. 7A and 7B are explanatory diagrams of operations performed when an SAS path between DEs is disconnected in this embodiment. FIG. 7A illustrates a state where the controller 105 accesses a disk in a normal state. FIG. 7B illustrates a state where the controller 105 accesses a disk via inter-system SAS paths 702 when the path has been disconnected.

As illustrated in FIG. 7A, no inter-system SAS paths 702 are logically connected in any DEs in the normal state. At this time, if a path has been disconnected between DEs #00 and #01 of the EXP#1 system, the inter-system SAS paths 702 are logically connected in DE #00 and DE #01, which are DEs directly connected to the disconnected path.

If the inter-system SAS paths 702 are connected when the path has been disconnected, the controller 105 can access the storage device 109 by using the same port as that used before the path is disconnected as illustrated in FIG. 7B. Moreover, the SAS expander that has detected the fault can be prevented from issuing BC (CHG).

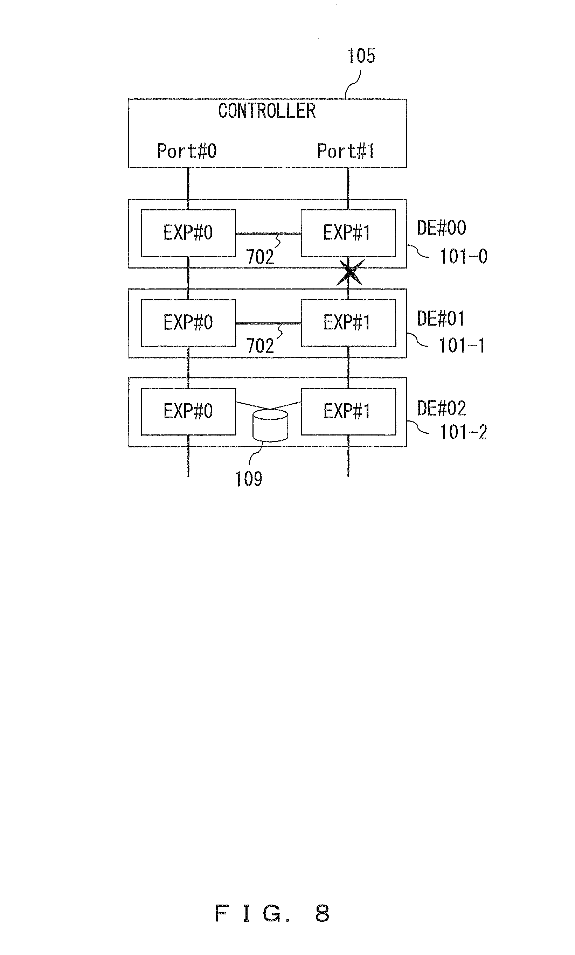

However, in a method with which an SAS expander that is directly connected to the disconnected path enables the inter-system SAS paths 702, a loop sometimes occurs depending on a site where the path is disconnected or the number of disconnected paths. Such a case where a loop is caused by enabling an inter-system SAS path 702 is described with reference to FIGs. 8 to 15.

The following cases are assumed by classifying states of SAS paths depending on a disconnected path and the number of disconnected paths when the path has been disconnected. Namely, a one-system 1-path disconnection between DEs, a one-system 1-path disconnection between the controller and a DE, a one-system 2-path disconnection between DEs, a one-system expander fault, a both-system 2-path disconnection between two identical DEs, and a both-system 2-path disconnection between different DEs. The one-system 2-path disconnection between DEs and the both-system 2-path disconnection between different DEs are further classified into two cases depending on a position relationship between two paths where a fault occurs.

Initially, the one-system 1-path disconnection between DEs is described with reference to FIG. 8. In FIG. 8, an SAS path between DE #00 and DE #01 of the EXP#1 system is disconnected as one example of the one-system 1-path disconnection between DEs. At this time, the expanders of DE #00 and DE #01 that have detected the disconnection of the SAS path logically connect an inter-system SAS path 702. In this case, a loop does not occur on the SAS paths even if the inter-system SAS paths 702 are respectively connected as illustrated in FIG. 8.

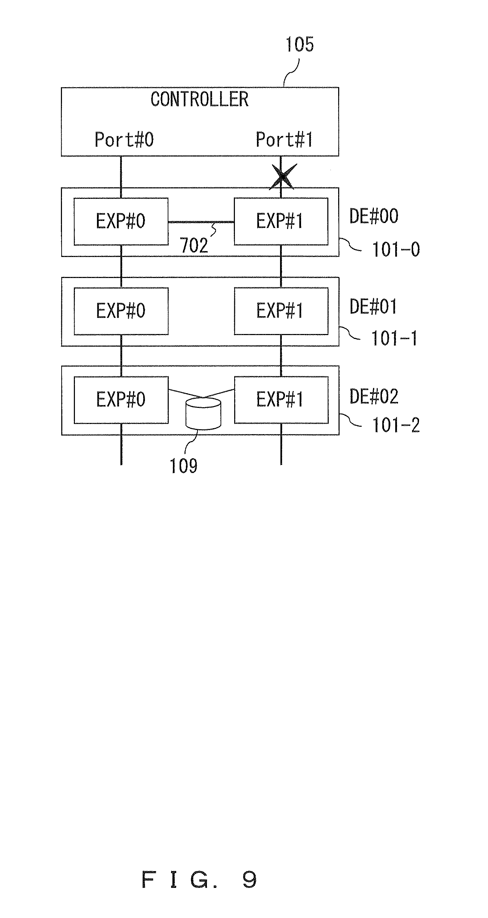

The one-system 1-path disconnection between the controller and a DE is described next with reference to FIG. 9. FIG. 9 illustrates one example of a case where an SAS path between Port #1 of the controller 105 and the expander of the EXP#1 system of DE #00 is disconnected. At this time, the expander of DE #00, which has detected the disconnection of the SAS path, connects an inter-system SAS path 702. In this case, a loop does not occur on the SAS path even if the inter-system SAS path 702 is connected as illustrated in FIG. 9. Note that the controller 105 immediately recognizes that the SAS path between the controller and the DE is disconnected.

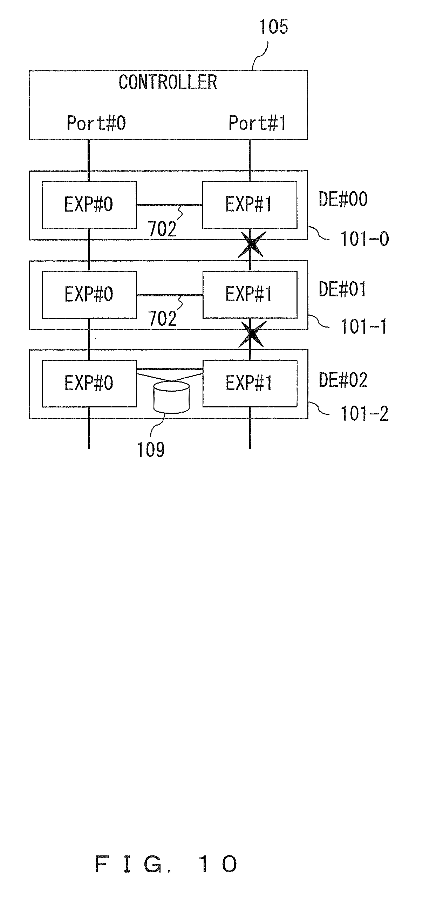

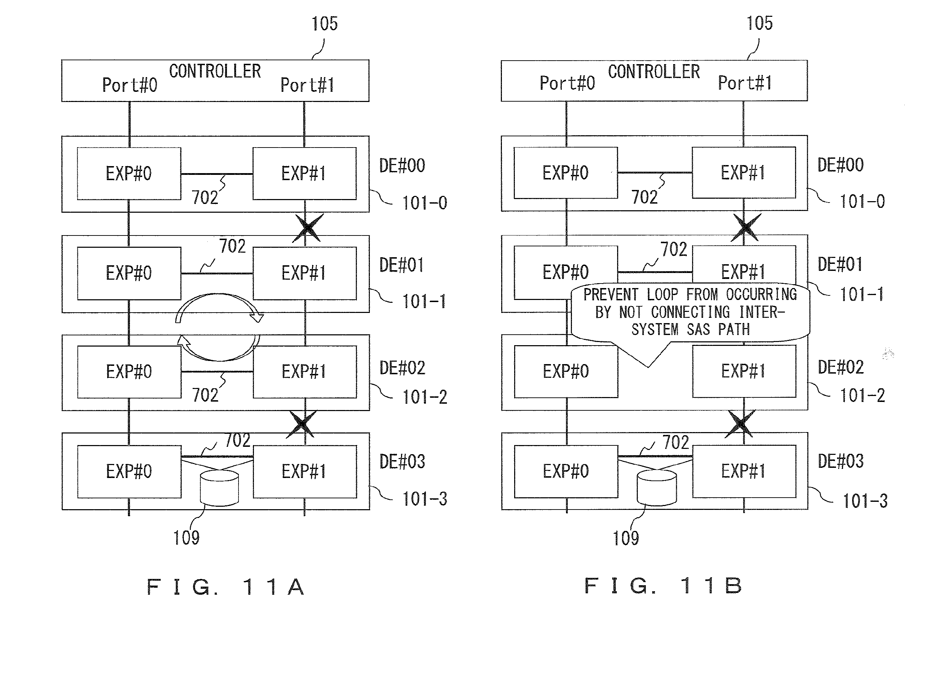

The one-system 2-path disconnection between DEs is described next with reference to FIGs. 10 and 11. In FIG. 10, an SAS path between DE #00 and DE #01 and that between DE #01 and DE #02 in the EXP#1 system are disconnected as one example of the one-system 2-path disconnection between DEs. At this time, the expanders of DE #00, DE #01, and DE #02, which have detected the disconnections of the SAS paths, respectively connect an inter-system SAS path 702. In this case, a loop does not occur on the SAS paths even if the inter-system SAS paths are respectively connected as illustrated in FIG. 10.

In FIGS. 11A and 11B, an SAS path between DE #00 and DE #01 and that between DE #02 and DE #03 in the EXP#1 system are disconnected as one example of the one-system 2-path disconnection between DEs. At this time, the expanders of DE #00, DE #01, DE #02 and DE #03, which have detected the disconnection of the SAS paths, respectively connect an inter-system SAS path 702. In this case, a loop occurs on the SAS paths as illustrated in FIG. 11A. Accordingly, in this embodiment, the inter-system SAS path of DE #02 is not connected, as illustrated in FIG. 11B, so as to prevent the loop from occurring.

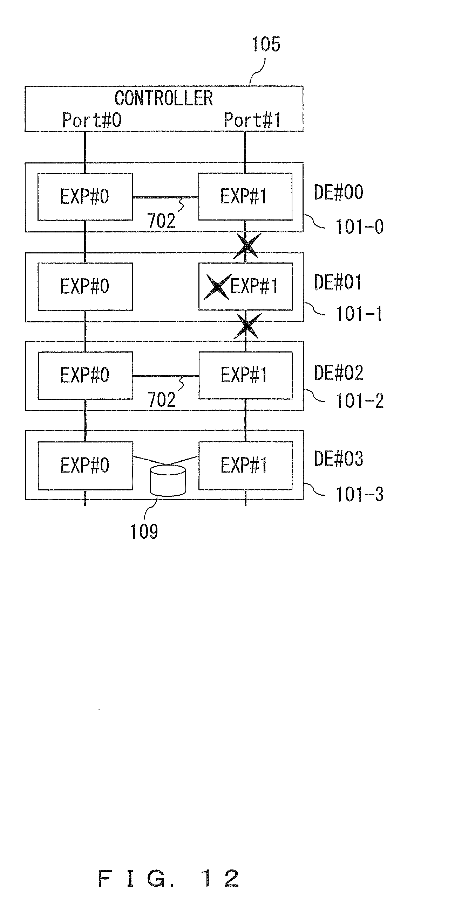

The one-system expander fault is described next with reference to FIG. 12. In FIG. 12, a fault occurs in the expanders of the EXP#1 of DE #01 as one example of the one-system expander fault. The expander of the EXP#0 of DE #01 reports that one of input ports of the DE is disconnected since the expander of the other system is faulty. The expanders of DE #00 and DE #02, which have received the notification or detected the disconnection of the SAS path, respectively connect an inter-system SAS path 702. In this case, a loop does not occur on the SAS paths even if the inter-system SAS paths are respectively connected as illustrated in FIG. 12.

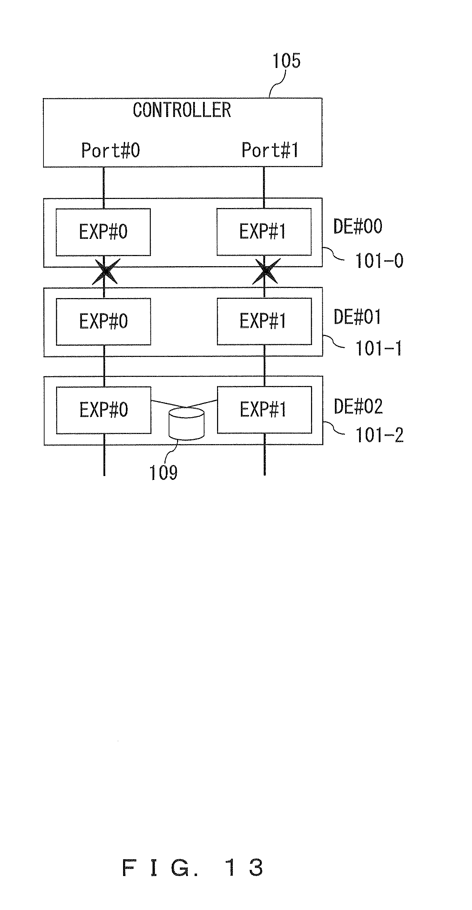

The both-system 2-path disconnection between two identical DEs is described next with reference to FIG. 13. In FIG. 13, SAS paths between DE #00 and DE #01 of both of the EXP#0 system and the EXP#1 system are disconnected as one example of the both-system 2-path disconnection between two identical DEs. In this case, the controller 105 cannot access the lower-level SAS expanders at a lower level than DE #01 as illustrated in FIG. 13. Accordingly, the SAS expanders address this problem by issuing BC (CHG) to notify the controller 105 that the paths have been disconnected.

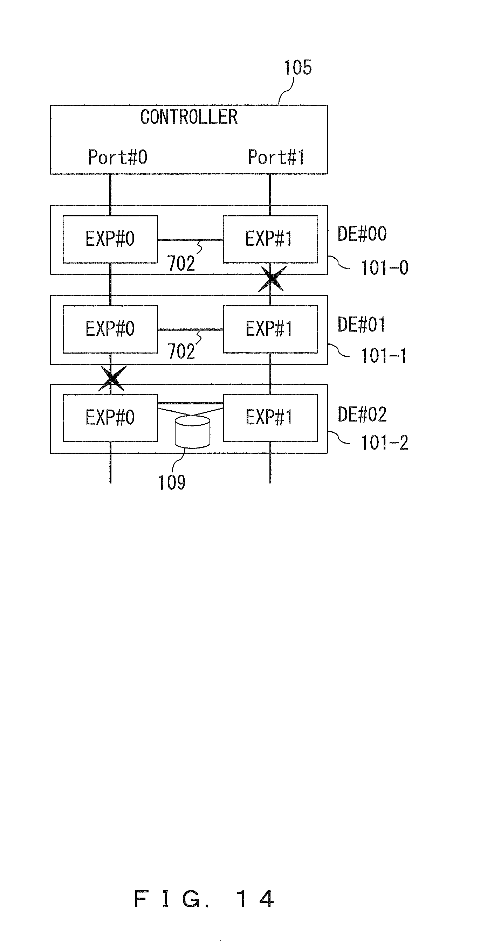

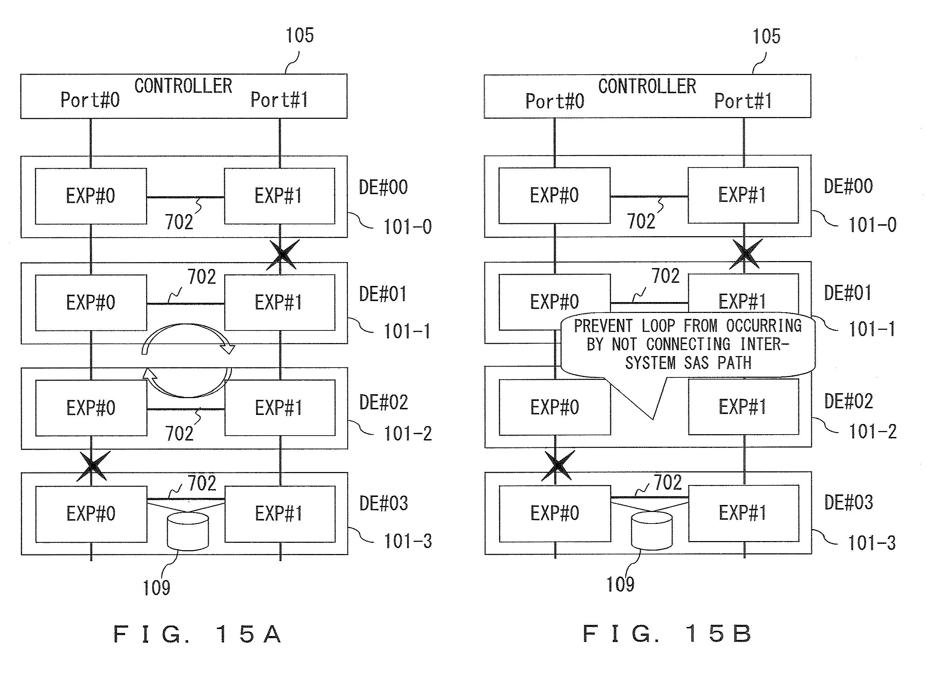

The both-system 2-path disconnection between different DEs is described next with reference to FIGs. 14 and 15. In FIG. 14, an SAS path between DE #00 and DE #01 of the EXP#1 system, and an SAS path between DE #01 and DE #02 of the EXP#0 system are disconnected as one example of the both-system 2-path disconnection between different DEs. At this time, the expanders of DEs #00, #01,and #02, which have detected the disconnection of the SAS path, respectively connect an inter-system SAS path 702. In this case, a loop does not occur on the SAS paths even if the inter-system SAS paths 702 are respectively connected as illustrated in FIG. 14.

In FIGS. 15A and 15B, an SAS path between DE #00 and DE #01 of the EXP#1 system, and that between DE #02 and DE #03 of the EXP#0 system, are disconnected as one example of the both-system 2-path disconnection between different DEs. At this time, the expanders of DE #00, DE #01, DE #02 and DE #03, which have detected the disconnection of the SAS path, respectively connect an inter-system SAS path 702. In this case, a loop occurs on the SAS paths as illustrated in FIG. 15A. Accordingly, the inter-system SAS path 702 of DE #02 is not connected, so as to prevent the loop from occurring in this embodiment as illustrated in FIG. 15B.

As described above, whether or not an SAS expander is to connect an inter-system SAS path 702 also varies depending on a site where an SAS path is disconnected or the number of disconnected paths. Moreover, whether or not to notify the controller 105 that an SAS path is disconnected varies. In this embodiment, DEs can determine whether or not to connect an inter-system SAS path 702, and whether or not to notify the controller 105 that an SAS path has been disconnected with no involvement from the controller 105 by making a notification among DEs and grasping a connection state of an SAS path.

Whether or not to notify the controller 105 that an SAS path has been disconnected is determined as follows.

As in the case illustrated in FIG. 9, the highest-level DE (the DE directly connected to the controller 105) does not make a notification using BC (CHG), although the DE connects an inter-system SAS path 702 upon detection of a change in a connection state of a higher-level side SAS path. This is because the controller 105 can immediately recognize the change in the connection state of the SAS path.

Additionally, if a change in a path has been detected at the Phy 303 connected to a storage device, an SAS expander issues BC (CHG). In contrast, if a change in a path has been detected at a Phy 303 connected to a higher-level or lower-level SAS expander, the expander does not issue BC (CHG). However, in the following case, BC (CHG) is issued because the discovery process needs to also be re-executed by the controller 105 and a connected configuration needs to be rebuilt. Namely, this is a case where an expander having an SAS address that is different from those of previously connected expanders is connected when an SAS path is recovered, and a case where SAS output ports of both expanders have been disconnected as illustrated in FIG. 13.

Whether or not an SAS expander that has detected a change in a connection state of an SAS path is to connect an inter-system SAS path 702 is determined as follows.

As illustrated in FIGs. 10 and 14, when any of the SAS paths on the higher-level side directly connected to a certain DE and any of the SAS paths on the lower-level side directly connected to the certain DE has been disconnected, a loop does not occur even if inter-system SAS paths are connected.

However, as illustrated in FIGs. 11 and 15, a loop does occur if two or more DEs are interposed between one disconnected SAS path and the other disconnected SAS path. In this case, if an inter-system SAS path 702 is connected on the higher-level side, a loop is prevented from occurring by not connecting an inter-system SAS path 702 of a DE on the lower-level side, from which the path disconnection has been detected.

To prevent a loop from occurring, specifically, an SAS expander logically connects an inter-system SAS path 702 with the following procedures. Namely, if the inter-system SAS path 702 is connected, the SAS expander notifies expanders of all the DEs that the inter-system SAS path 702 is to be connected. As a notification timing, an SAS expander as a connection candidate makes this notification before the inter-system SAS path 702 is connected. This is because a loop occurs if the notification is made after the inter-system SAS path 702 has been connected. Then, the SAS expander waits for replies to the notification, which are made from the expanders of all the DEs, and logically connects the actual inter-system SAS path 702.

In this embodiment, a loop connection is taken into account as described above. However, a disconnected path may be suddenly recovered. Therefore, an SAS expander does not change an internal table (routing table) even if a loop has been detected, and does not handle the loop, so that a command from the controller 105 can be properly transferred.

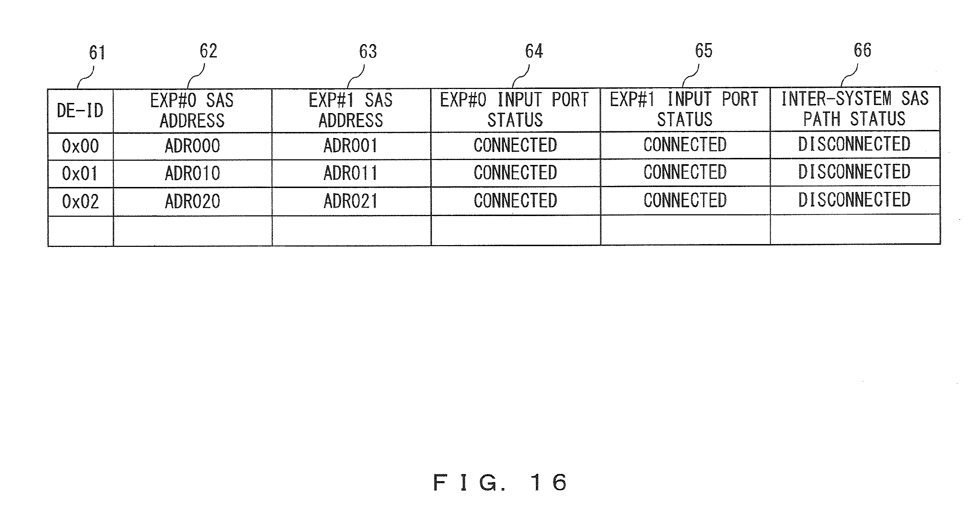

A data structure and notification information, which are used in the process for preventing a loop from occurring, are described next. Namely, an expander connection management table, a connection expander SAS address management table, expander connection notification information, expander connection reply information, and an inter-system connection matrix are described with reference to FIGs. 16 to 20. In the following description, a port of an SAS expander connected to a device on the higher-level side, and a port of an SAS expander connected to a device on the lower-level side, are sometimes referred to as an input port and an output port, respectively. Moreover, a DE to which a certain expander belongs is sometimes referred to as a local DE.

FIG. 16 illustrates a data structure of the expander connection management table in this embodiment. The SAS expander connection management table is stored in the memory 302 of the expander.

The expander connection management table is a table that indicates a connection state of an input port of each expander connected to the storage system, and a connection state of an inter-system SAS path 702. Specifically, the expander connection management table includes data items such as a DE-ID 61, an EXP#0 SAS address 62, an EXP#1 SAS address 63, EXP#0 input port status 64, EXP#1 input port status 65, and inter-system SAS path status 66.

The DE-ID 61 is an identification number that the controller 105 uniquely assigns to a DE. The EXP#0 SAS address 62 is an SAS address of an SAS expander of the EXP#0 of the DE-ID 61. The EXP#1 SAS address 63 is an SAS address of an SAS expander of the EXP#1 system of the DE-ID 61. The EXP#0 input port status 64 indicates whether an SAS path connected to an input port of an SAS expander of the EXP#0 system of the DE-ID 61 is either connected or disconnected. The EXP#1 input port status 65 indicates whether an SAS path connected to an input port of an SAS expander of the EXP#1 system of the DE-ID 61 is either connected or disconnected. The inter-system SAS path status 66 indicates whether an inter-system SAS path 702 of the DE-ID 61 is either connected or disconnected.

For example, in FIG. 16, a DE indicated with a DE-ID "0x00" includes an SAS expander of the EXP#0 system having an SAS address "ADR000", and an SAS expander of the EXP#1 system having an SAS address "ADR001". States of the input ports of the SAS expanders of the EXP#0 system and the EXP#1 system are "connected", and the state of the inter-system SAS path 702 is "disconnected".

Since an output port of the DE in the lowest-level stage is normally disconnected, a connection state of an input port is managed in the expander connection management table.

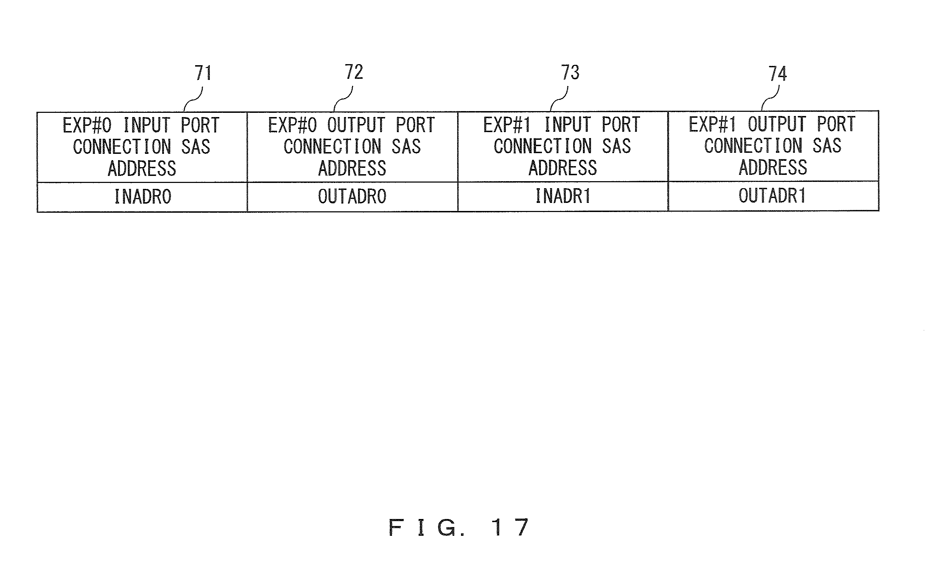

FIG. 17 illustrates one example of a data structure of the connection expander SAS address management table. The connection expander SAS address management table is stored in the memory 302 of an SAS expander.

The connection expander SAS address management table is a table indicating an SAS address of an SAS expander connected to an input port and an output port of an SAS expander within a DE. The connection expander SAS address management table includes data items such as an EXP#0 input port connection SAS address 71, an EXP#0 output port connection SAS address 72, an EXP#1 input port connection SAS address 73, and an EXP#1 output port connection SAS address 74.

The EXP#0 input port connection SAS address 71 is an address of an SAS expander connected to an input port of the EXP#0 system of the DE to which the expander belongs. The EXP#0 output port connection SAS address 72 is an address of an SAS expander connected to an output port of the EXP#0 system of the DE to which the expander belongs. The EXP#1 input port connection SAS address 73 is an address of an SAS expander connected to an input port of the EXP#1 system of the DE to which the expander belongs. The EXP#1 output port connection SAS address 74 is an address of an SAS expander connected to an output port of the EXP#1 system of the DE to which the expander belongs.

For example, in FIG. 17, the address of the SAS expander connected to the input port of the EXP#0 system of the DE to which the expander belongs is "INADR0", the address of the SAS expander connected to the output port of the EXP#0 system of the DE to which the expander belongs is "OUTADRO", the address of the SAS expander connected to the input port of the EXP#1 system of the DE to which the expander belongs is "INADR1", and the address of the SAS expander connected to the output port of the EXP#1 system of the DE to which the expander belongs is "OUTADR1".

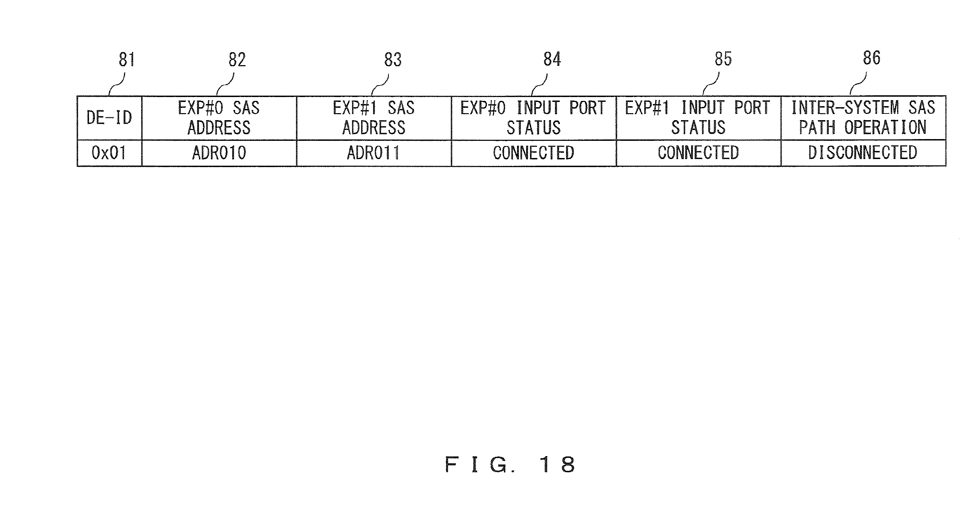

FIG. 18 illustrates one example of the expander connection notification information.

The expander connection notification information is used to notify other DEs of a connection state of a local DE. The expander connection notification information includes data items such as a DE-ID 81, an EXP#0 SAS address 82, an EXP#1 SAS address 83, EXP#0 input port status 84, EXP#1 input port status 85, and an inter-system SAS path operation 86.

The DE-ID 81 is an identification number uniquely assigned to a DE. The EXP#0 SAS address 82 is an SAS address of an SAS expander of the EXP#0 system of the DE-ID 81. The EXP#1 SAS address 83 is an SAS address of an SAS expander of the EXP#1 system of the DE-ID 81. The EXP#0 input port status 84 indicates whether an SAS path connected to an input port of an SAS expander of the EXP#0 system of the DE-ID 81 is either connected or disconnected. The EXP#1 input port status 85 indicates whether or not an SAS path connected to an input port of an SAS expander of the EXP#1 system of the DE-ID 81 is either connected or disconnected. The inter-system SAS path operation 86 indicates whether or not to connect an inter-system SAS path 702.

For example, FIG. 18 illustrates the example of the expander connection notification information issued when DE #01 notifies the other DEs of the connection state of the local DE. The DE indicated with the DE-ID "0x01" includes an SAS expander of the EXP#0 system having an SAS address "ADR010", and an SAS expander of the EXP#1 system having an SAS address "ADR011". FIG. 18 also depicts that states of the input ports of the SAS expanders of the EXP#0 system and the EXP#1 system are "connected", and that the state of the inter-system SAS path 702 is to be disconnected.

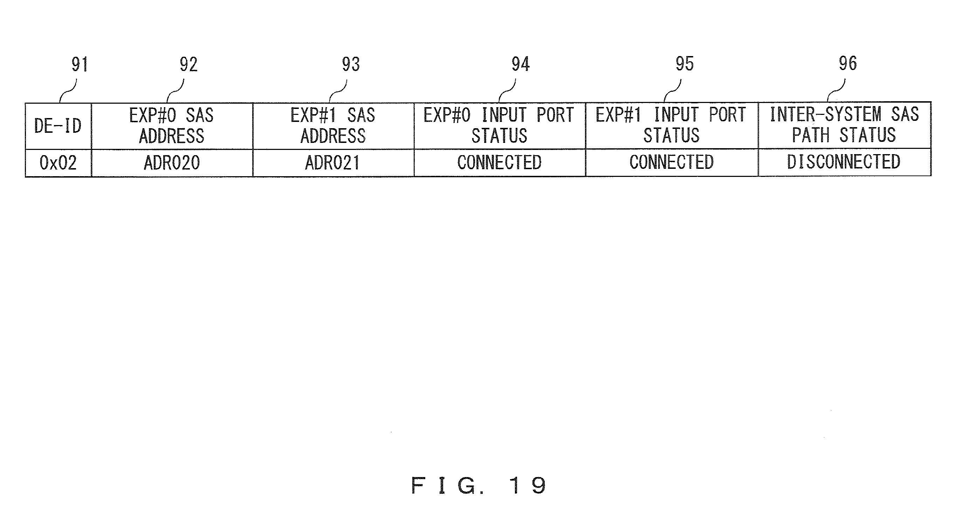

FIG. 19 illustrates one example of the expander connection reply information.

The expander connection reply information is information that is issued as a reply to the connection notification information, and is used to report a connection state of a local DE. The expander connection notification information includes data items such as a DE-ID 91, an EXP#0 SAS address 92, an EXP#1 SAS address 93, an EXP#0 input port status 94, an EXP#1 input port status 95, and an inter-system SAS path status 96.

The DE-ID 91 is an identification number uniquely assigned to a DE. The EXP#0 SAS address 92 is an SAS address of an SAS expander of the EXP#0 system of the DE-ID 91. The EXP#1 SAS address 93 is an SAS address of an SAS expander of the EXP#1 system of the DE-ID 91. The EXP#0 input port status 94 indicates whether an SAS path connected to an input port of an SAS expander of the EXP#0 system of the DE-ID 91 is either connected or disconnected. The EXP#1 input port status 95 indicates whether an SAS path connected to an input port of an SAS expander of the EXP#1 system of the DE-ID 91 is either connected or disconnected. The inter-system SAS path status 96 indicates whether or not the inter-system SAS path 702 of the DE-ID 91 is connected.

For example, FIG. 19 illustrates one example of the expander connection reply information issued when DE #02 returns the connection state of the local DE as a reply. A DE indicated with a DE-ID "0x01" includes an SAS expander of the EXP#0 system having an SAS address "ADR010", and an SAS expander of the EXP#1 system having an SAS address "ADR011". States of the input ports of the SAS expanders of the EXP#0 system and the EXP#1 system are "connected", whereas a state of the inter-system SAS path 702 is "disconnected".

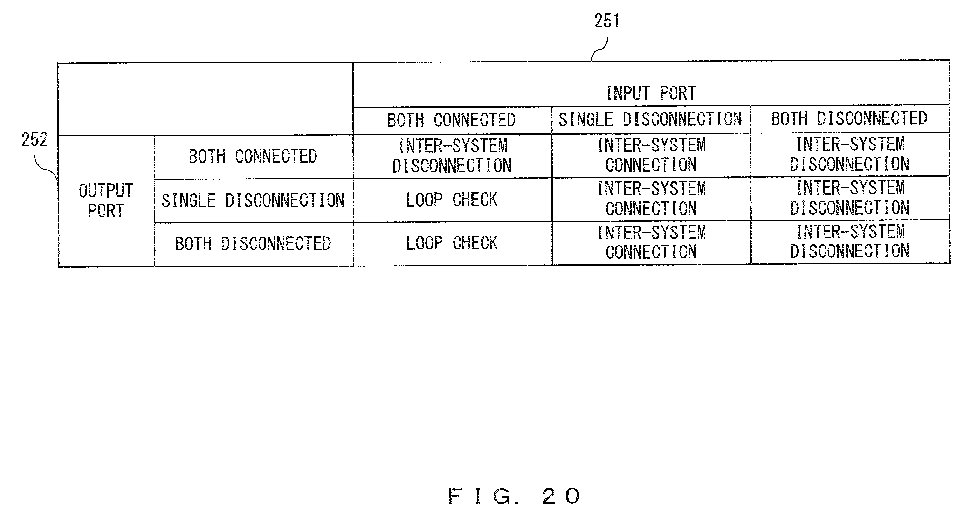

FIG. 20 illustrates one example of the inter-system connection matrix. In the following description, an operation for enabling an inter-system SAS path 702 is sometimes referred to as an inter-system connection. Moreover, an operation for disabling an inter-system SAS path 702 is sometimes referred to as an inter-system disconnection.

The inter-system connection matrix is used to decide whether or not an expander will enable an inter-system SAS path 702 if a change is detected in a connection state of an input port or an output port. A result of deciding whether or not to enable an inter-system SAS path 702 varies depending on connection states of an input port and an output port of both expanders of a local DE, and connection states of inter-system SAS paths 702 of other DEs.

The inter-system connection matrix includes column items indicating a connection state of an input port 251 of a DE, namely, items such as both-connected, single-disconnection and both-disconnected, and row items indicating a connection state of an output port 252 of the DE, namely, items such as both-connected, single-disconnection and both-disconnected. In a combination of states of the input port and the output port, a result of determining whether or not an expander enables an inter-system SAS path 702 is represented.

Here, the both-connected state of an input port indicates a state where input ports of both of expanders of a local DE are connected. The single-disconnection state of an input port indicates a state where an input port of one of the expanders of the local DE is disconnected. The both-disconnected state of an input port indicates a state where the input ports of both of the expanders in the local DE are disconnected. Also a both-connected state, a single-disconnection state, and a both-disconnected state of the output port are similar to those of the input port.

If the state of the input port is both-connected and the state of the output port is both-connected, an expander decides to disable an inter-system SAS path 702 (inter-system disconnection). If the state of the input port is both-connected and the state of the output port is single-disconnection, the expander performs a loop check, and decides whether or not to enable the inter-system SAS path 702 according to a result of the loop check. The loop check will be described later. Also if the state of the input port is both-connected and the state of the output port is both-disconnected, the expander performs the loop check, and decides whether or not to enable the inter-system SAS path 702 according to a result of the loop check. If the state of the input port is a single-disconnection state, the expander decides to enable the inter-system SAS path 702 (inter-system connection) regardless of the state of the output port. If the state of the input port is both-disconnected, the expander decides to disable the inter-system SAS path 702 (inter-system disconnection) regardless of the state of the output port.

The loop check performed by an expander in the determination of the inter-system connection matrix is described next.

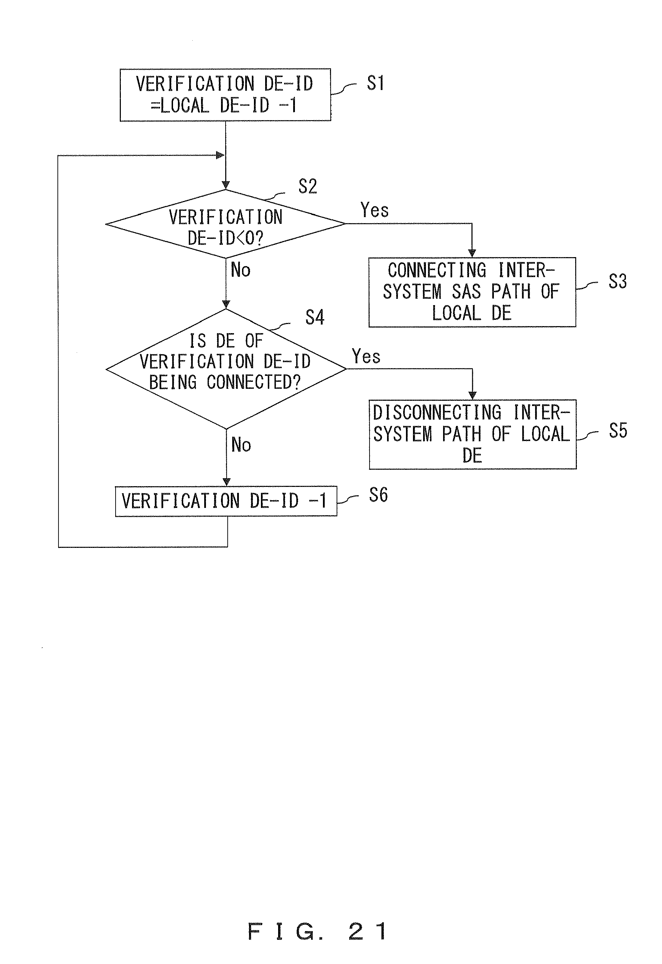

FIG. 21 is a flowchart illustrating operations that the expander performs in the loop check.

In the loop check, a variable named a verification DE-ID is used as a temporary variable. Moreover, in the loop check, a DE-ID, which is an identification number uniquely assigned to a DE, is used. In this embodiment, DE-IDs are assigned as follows. Namely, a DE-ID of a DE (highest-level DE) directly connected to the controller 105 is assigned as 0, and a DE-ID of a DE connected to the highest-level DE is assigned as 1. Subsequently, DE-IDs of lower-level DEs are assigned so that a value of a DE-ID of a lower-level DE results in a value obtained by incrementing a DE-ID of a directly connected higher-level DE by 1.

In the loop check, a value obtained by subtracting 1 from a DE-ID of a local DE is substituted for the verification DE-ID (S1). Next, whether or not the verification DE-ID is smaller than 0 is determined (S2). If the verification DE-ID is smaller than 0 ("YES" in S2), it is decided to enable an inter-system SAS path 702 of the local DE (inter-system connection). If the verification DE-ID is equal to or larger than 0 ("NO" in S2), whether or not the inter-system SAS path 702 of the DE of the verification DE-ID is being connected is determined (S4). Specifically, in the expander connection management table, information of the inter-system SAS path status 67 corresponding to the DE-ID 61 that matches the verification DE-ID is referenced, and whether or not the inter-system SAS path 702 of the DE is being connected is determined. If the inter-system SAS path 702 is being connected as a result of the determination ("YES" in S4), it is decided to disable the inter-system SAS path 702 of the local DE (inter-system disconnection) (S5). Alternatively, if the result of the determination indicates that the inter-system SAS path 702 is not being connected ("NO" in S4), the value of the verification DE-ID is decremented by 1 (S6). Then, the processes in steps S2 to S6 are repeated.

A flow of operations of the entire storage system when a connection state of an SAS path has changed and an expander has detected the change in the connection state of the SAS path is described next.

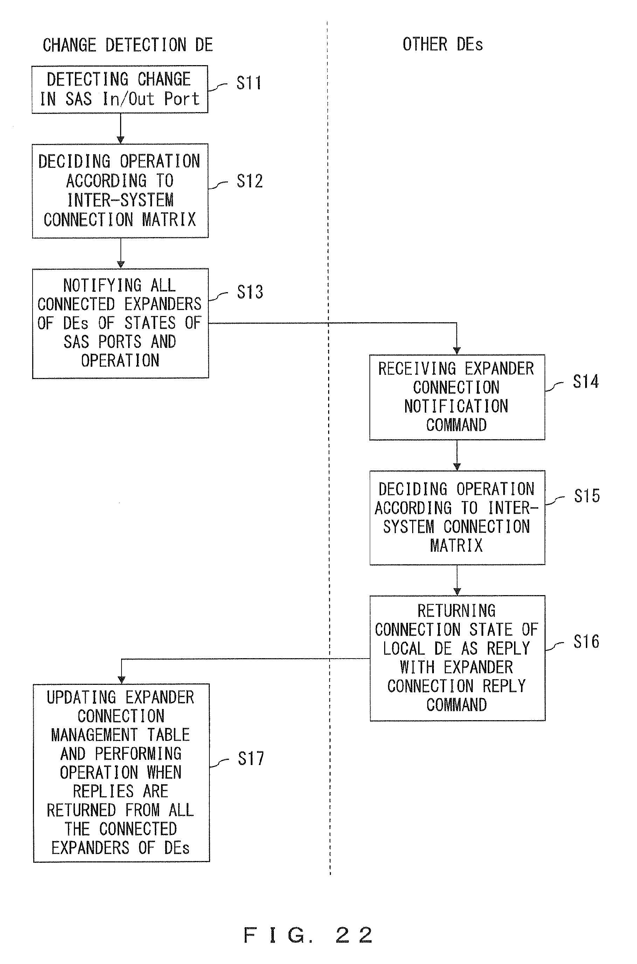

FIG. 22 is a flowchart illustrating operations of the entire storage system when a state of an SAS input/output port has changed as one example of this embodiment. FIG. 22 also illustrates a relationship between operations of an expander (hereinafter referred to as a change detection expander) that has detected the change in the state of the SAS input/output port and those of expanders of the other DEs (hereinafter referred to as other expanders). The flowchart of FIG. 22 illustrates the operations of the DEs other than the highest-level DE.

Upon detection of the change in the SAS input port or the SAS output port (S11), an expander of the storage system 100 decides whether or not to enable an inter-system SAS path 702 according to an inter-system connection matrix (S12). In S12, only whether or not to enable the inter-system SAS path 702 is decided, and an actual operation is performed later. Next, the change detection expander notifies all of the expanders connected to the storage system 100 of the states of the SAS ports of the local DE and the operation decided in S12 by using expander connection notification information (S13).

The expanders of the other DEs decide whether or not to enable an inter-system SAS path 702 according to the inter-system connection matrix (S15) upon receipt of the notification made with the expander connection notification information (S14). Then, the expanders of the other DEs notify a source that has issued the expander connection notification information of the connection state of the local DE with expander connection reply information (S16).

Upon receipt of replies from all the expanders connected to the storage system 100, the change detection expander updates the expander connection management table, and performs the operation decided in S12 (S17). The operation for receiving the replies from the expanders in S17 can be cited as one example of an operation that the communication state obtaining unit 3 performs to obtain communication states.

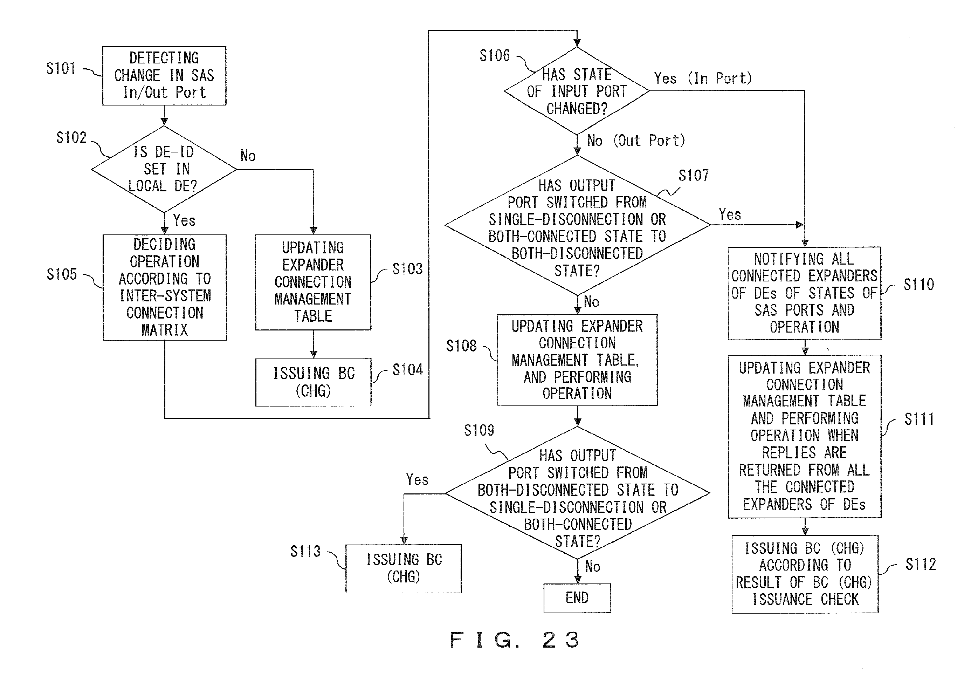

Details of the process of the change detection expander upon detection of the change in the SAS input port or the SAS output port in FIG. 22 are described next with reference to a flowchart illustrated in FIG. 23.

Initially, when the expander of the storage system 100 has detected the change in the SAS input port or the SAS output port (S101), the change detection expander determines whether or not a DE-ID is set in the local DE (S102).

If the DE-ID is not set in the local DE ("NO" in S102), the change detection expander updates a field of the expander connection management table, from which the change has been detected (S103), and issues BC (CHG) (S104). In this case, the change detection expander does not connect an inter-system SAS path 702. If the DE-ID is not set in the local DE, the expander cannot determine whether or not an SAS loop has occurred since the position of the DE cannot be learned.

If the DE-ID is set in the local DE ("YES" in S102), the change detection expander decides whether or not to connect the inter-system SAS path 702 according to an inter-system connection matrix (S105).

Next, the change detection expander determines whether the change detected in S101 is either a change in a state detected at the input port or a change in a state detected at the output port (S106).

If the change detected in S101 is a change detected at the input port ("Yes" in S106), the change detection expander notifies all the expanders connected to the storage system 100 of the states of the SAS ports and the operation (S110). The change detection expander issues expander connection notification information, so that this notification is made. Here, as the inter-system SAS path operation 86 of the expander connection notification information, the operation decided in S105 is stored. Moreover, the connection notification information is conveyed between expanders of different DEs via an SAS path, and the information is conveyed between SAS expanders within a DE via an inter-system communication path 701. Operations of an expander that has received the notification information will be described later.

When replies are returned from all the notified expanders, the change detection expander reflects the state of the local DE and results of the replies on the expander connection management table, and performs the connection operation of the inter-system SAS path 702 decided in S105 (S111). Specifically, the operation for reflecting the results of the replies on the expander connection management table is performed as follows. Contents of the received expander connection reply information are updated to a row of the DE-ID 61 of the expander connection management table, which matches a number indicated with the DE-ID 91 of the received expander connection reply information. Namely, the change detection expander reflects information of the EXP#0 SAS address 92 on the EXP#0 SAS address 62, and also reflects information of the EXP#1 SAS address 93 on the EXP#1 SAS address 63. Moreover, the change detection expander reflects information of the EXP#0 input port status 94 on the EXP#0 input port status 64, also reflects information of the EXP#1 input port status 95 on the EXP#1 input port status 65, and further reflects information of the inter-system SAS path status 96 on the inter-system SAS path status 66.

Next, the change detection expander issues BC (CHG) based on a result of a BC (CHG) issuance check (S112). The BC (CHG) issuance check will be described later.

If the change detected in S101 is the change occurring at the output port ("NO" in S106), the change detection expander determines whether or not the change at the output port is a change switched from the single-disconnection state or the both-connected state to the both-disconnected state (S107). If the change at the output port is the change switched from the single-disconnection state to the both-disconnected state or the change switched from the both-connected state to the both-disconnected state ("YES" in S107), the process branches to S110. As a result of this branch, if the port from which the change has been detected is an output port, other DEs are notified of the states of the SAS ports and the operation only when needed (when a lower-level DE does not exist and an expander that makes a notification is absent). Consequently, higher-level and lower-level DEs, which have detected the path disconnection, can be prevented from making a notification to one another.

Alternatively, if the change at the output port which has been detected in S101 is neither the change switched from the single-disconnection state to the both-disconnected state nor the change switched from the both-connected state to the both-disconnected state ("No" in S107), the change detection expander performs the following operation. Namely, the change detection expander performs the operation decided in S105 after reflecting the state of the local DE on the expander connection management table (S108).

Next, whether the change at the output port which has been detected in S101 is either a change switched from the both-disconnected state to the single-disconnection state or a change switched from the both-disconnected state to the both-connected state is determined (S109). If the change at the output port is the change switched from the both-disconnected state to the single-disconnection state or the change switched from the both-disconnected state to the both-connected state ("YES" in S109), the process branches to S113. As a result of this branch, if a lower-level DE is connected, the change detection expander needs to issue BC (CHG) in a similar manner as in the both-disconnected state. However, since an expander that makes a notification is present, the change detection expander only issues BC (CHG).

Alternatively, if the change at the output port which has been detected in S101 is neither the change switched from the both-disconnected state to the single-disconnection state nor the change switched from the both-disconnected state to the both-connected state ("NO" in S109), the process is terminated.

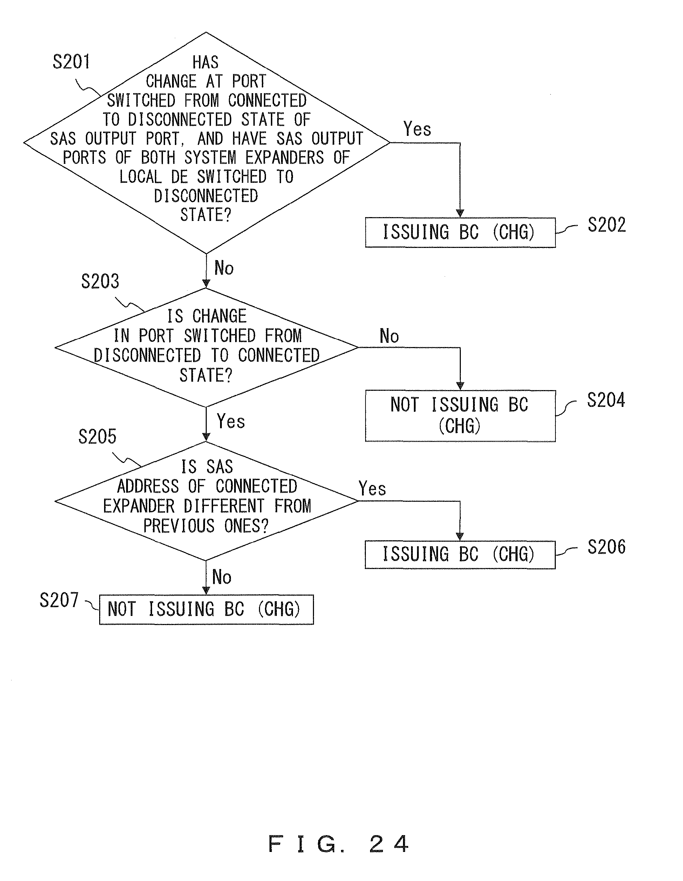

Operation of the BC (CHG) issuance check are described next with reference to FIG. 24. The BC (CHG) issuance check is a process with which the change detection expander decides whether or not to issue a BC (CHG) command. In S112 of FIG. 23, the change detection expander executes this process, and issues BC (CHG) based on a result of the BC (CHG) issuance check.

FIG. 24 is a flowchart illustrating the operations of the BC (CHG) issuance check as one example of this embodiment. The change detection expander determines whether or not the change at the port which has been detected in S101 is the change where the connection state of the output port is switched to the disconnection state and output ports of expanders of both of the systems in the local DE are switched to the disconnection state (S201). If the change at the port which has been detected in S101 is the change where the connection state of the output port is switched to the disconnection state and the output ports of the expanders of both of the systems in the local DE are switched to the disconnection state, the change detection expander decides to issue BC (CHG) (S202). Otherwise, the change detection expander determines whether or not the change at the port which has been detected in S101 is the change switched from the disconnection state to the connection state (S203).

If the change at the port is not the change switched from the disconnection state to the connection state, the change detection expander decides not to issue BC (CHG) (S204). Alternatively, if the change at the port is the change switched from the disconnection state to the connection state, the change detection expander determines whether or not an SAS address of the connected expander is different from previous ones (S205). Specifically, the change detection expander makes a comparison between the SAS address of the connected expander and SAS addresses (71 to 74) registered to the connection expander SAS address management table, and determines that the SAS address of the connected expander is different from the previous ones if the comparison results in a mismatch.

If the SAS address of the connected expander is different from the previous ones, the change detection expander decides to issue BC (CHG) (S206). Alternatively, if the SAS address is the same as any of the previous ones, the change detection expander decides not to issue BC (CHG) (S207).

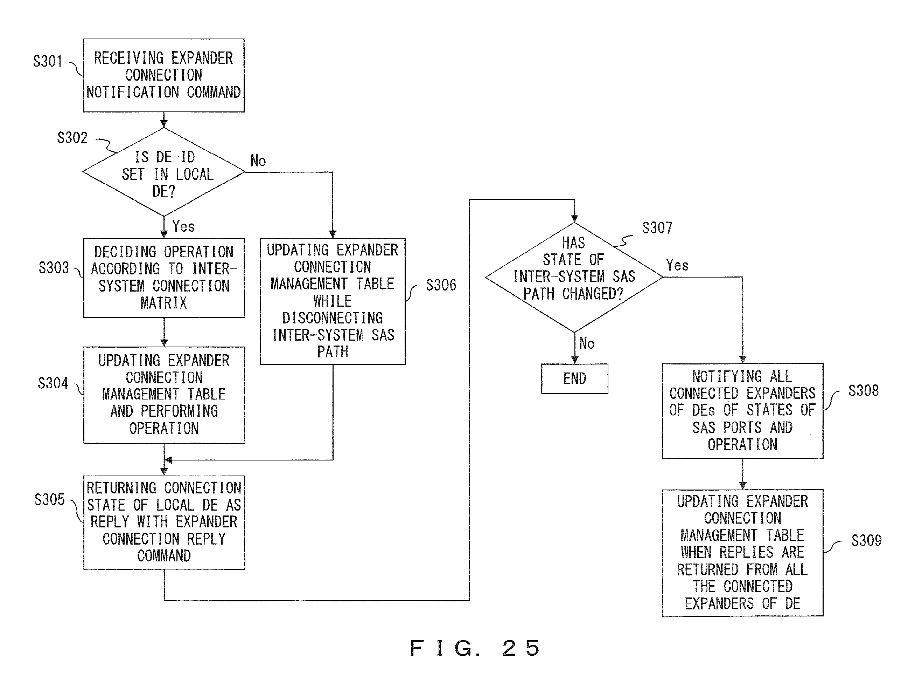

Operations performed when the expander connection notification information is received are described next with reference to FIG. 25.

FIG. 25 is a flowchart illustrating the operations performed when the expander connection notification information is received as one example of this embodiment. For the sake of explanation, an expander that has received the expander connection notification information is hereinafter referred to as a reception expander.

Upon receipt of the expander connection notification information (S301), the reception expander initially determines whether or not a DE-ID is set in the local DE (S302).

If the DE-ID is set in the local DE ("YES" in S302), the reception expander decides whether or not to enable an inter-system SAS path 702 according to an inter-system connection matrix (S303). The decision in S303 is made after contents of the received connection notification information are reflected. Then, the reception expander updates the expander connection management table based on the contents of the received expander connection notification information and the decision made in S303, and executes a result of the decision made in S303 (S304). Specifically, the update of the expander connection management table based on the contents of the received expander connection notification information is made as follows. Namely, the reception expander updates the contents of the received expander connection notification information to a row of the DE-ID 61 in the expander connection management table, which matches a number indicated with the DE-ID 81 of the received expander connection notification information. The reception expander reflects information of the EXP#0 SAS address 82 on the EXP#0 SAS address 62, and further reflects information of the EXP#1 SAS address 83 on the EXP#1 SAS address 63. Moreover, the reception expander reflects information of the EXP#0 input port status 84 on the EXP#0 input port status 64, reflects information of the EXP#1 input port status 85 on the EXP#1 input port status 65, and further reflects information of the inter-SAS path operation 86 on the inter-system SAS path status 66.

Thereafter, the reception expander returns the connection state of the local DE as a reply to a transmission source of the expander connection notification information with expander connection reply information (S305). The expander connection reply information is conveyed between expanders of different DEs via an SAS path, and conveyed between SAS expanders within the same DE via an inter-system communication path 701.

If the DE-ID is not set in the local DE ("NO" in S302), the reception expander reflects the contents of the received expander connection notification information on the expander connection management table while disconnecting the inter-system SAS path 702 (S306). Specifically, the reception expander updates the contents of the received expander connection notification information to a row of the DE-ID 61 in the expander connection management table which matches a number indicated with the DE-ID 81 of the received expander connection notification information. The reason why the expander does not connect an inter-system SAS path 702 is that the reception expander cannot determine whether or not an SAS loop has occurred since the position of the DE cannot be learned unless the DE-ID is set. Thereafter, the process proceeds to S305.

Next, the reception expander determines whether or not the state of the inter-system SAS path 702 of the local DE has changed in S304 (S307). If the state of the inter-system SAS path 702 has not changed, the process is terminated.

Alternatively, if the state of the inter-system SAS path 702 has changed, the reception expander notifies all the expanders connected to the storage system 100 of states of the SAS ports and the operation (S308). The reception expander issues expander connection notification information, so that this notification is made. Here, the operation decided in S303 is stored as the inter-system SAS path operation 86 of the expander connection notification information. Moreover, the expander connection notification information is conveyed between expanders of different DEs via an SAS path, and conveyed between SAS expanders within the same DE via an inter-system communication path 701. Also operations of an expander that has received the notification information issued here are performed according to the flow of the operations illustrated in FIG. 25.

When replies are returned from all the notified expanders, the reception expander reflects the state of the local DE and results of the replies on the expander connection management table (S309).

Note that this embodiment is not limited to the above described one. This embodiment can take various configurations or can be implemented as various embodiments.

According to this embodiment, a load imposed on a controller can be lightened in an information communication system for rebuilding a configuration of paths so as to bypass a faulty path when a fault occurs on the path.

## Claims

1. A relay device used in an information communication system which includes a plurality of the relay devices for relaying a communication between a storage device which stores data and a controller which accesses the storage device, the plurality of the relay devices including a target relay device, a first relay device, a second relay device, a third relay device, a fourth relay device, and a fifth relay device, the first relay device being arranged in a stage preceding the target relay device and being connected to the target relay device via a first logical path, the second relay device being arranged in a stage succeeding the target relay device and being connected to the target relay device via the first logical path, the third relay device relaying a communication via a second logical path different from the first logical path, the forth relay device being arranged in a stage preceding the third relay device and being connected to the third relay device via the second logical path, and the fifth relay device being arranged in a stage succeeding the third relay device and being connected to the third relay device via the second logical path, the target relay device comprising:
a detection unit (2) that detects a change in a first communication state between a target relay device and the first relay device, or a change in a second communication state between the target relay device and the second relay device;
a communication state obtaining unit (3) that obtains, from the third relay device, a third communication state between the third relay device and a forth relay device and a forth communication state between the third relay device and the fifth relay device; and
a path connection unit (4) that connect the first logical path to the third relay device to create a bypass when the detection unit (2) detects the change in the first communication state or the second communication state and (i) when either the first communication state or the third communication state is abnormal or (ii) when both the first communication state and the third communication state are normal and either or both of the second communication state and the forth communication state is abnormal.

2. The relay device according to claim 1, wherein
the path connection unit (4) connects the first logical path to the third relay according to a fifth communication state between the first relay device and the fourth relay device.

3. The relay device according to claim 2, the target relay device further comprising:
a processing unit (5) that executes a process for issuing a notification to connect the first logical path to the third relay device to create the bypass to the plurality of relay devices arranged between the storage and the controller.

4. The relay device according to claim 3, wherein
a processing unit (5) connects the first logical path to the third relay device to create the bypass according to a notification to create the bypass sent from the any of the plurality of the relay devices arranged between the storage device and the controller.

5. The relay device according to claim 1, the target relay device further comprising:
an information collection request issuance unit (6) that issues, according to the change in the first communication state, an information collection request to cause a sixth relay device arranged between the storage and the controller to collect a sixth communication state between the sixth relay device and a seventh relay device that is arranged in a stage preceding or succeeding the sixth relay device and connected to the sixth relay device, when the change in the first communication state is detected.

6. A connection management method used in a relay device used in an information communication system which includes a plurality of the relay devices for relaying a communication between a storage device which stores data and a controller which accesses the storage device, the plurality of the relay devices including a target relay device, a first relay device, a second relay device, a third relay device, a fourth relay device, and a fifth relay device, the first relay device being arranged in a stage preceding the target relay device and being connected to the target relay device via a first logical path, the second relay device being arranged in a stage succeeding the target relay device and being connected to the target relay device via the first logical path, the third relay device relaying a communication via a second logical path different from the first logical path, the forth relay device being arranged in a stage preceding the third relay device and being connected to the third relay device via the second logical path, and the fifth relay device being arranged in a stage succeeding the third relay device and being connected to the third relay device via the second logical path, the connection management method comprising:
detecting a change in a first communication state between the target device and the first relay device , or a change in a second communication state between the target relay device and the second relay device (S11);
obtaining, from the third relay device, a third communication state between the third relay device and the forth relay device and a forth communication state between the third relay device and the fifth relay device (S 17); and
connecting a logical path to the third relay device to create a bypass when the change in the first communication state or the second communication state is detected and (i) when either the first communication state or the third communication state is abnormal or (ii) when both the first communication state and the third communication state are normal and either or both of the second communication state and the forth communication state is abnormal (S 17).

7. The connection management method according to claim 6, wherein
connecting the first path to the third relay device to create the bypass according to a fifth communication state between the first relay device and the fourth relay device (S17).

8. The connection management method according to claim 7, the connection management method further comprising:
issuing a notification for connecting the first logical path to the third relay device to create the bypass to the plurality of the relay devices arranged between the storage device and the controller (S 13).

9. The connection management method according to claim 8, wherein
the first logical path to the third relay device to create the bypass according to a notification to create the bypass sent from the any of the plurality of the relay devices arranged between the storage device and the controller is connected(S304).

10. The connection management method according to claim 6, the connection management method further comprising:
issuing, according to the change in the first communication state, an information collection request to cause a sixth relay device arranged between the storage device and the controller to collect a sixth communication state between the sixth relay device and a seventh relay device that is arranged in a stage preceding or
succeeding the sixth relay device and connected to the sixth relay device , when the change in the first communication state is detected (S112).

11. An information communication system comprising
a plurality of relay devices for relaying a communication between a storage device which stores data and a controller which accesses the storage device, the plurality of the relay devices including a target relay device, a first relay device, a second relay device, a third relay device, a fourth relay device, and a fifth relay device, the first relay device being arranged in a stage preceding the target relay device and being connected to the target relay device via a first logical path, the second relay device being arranged in a stage succeeding the target relay device and being connected to the target relay device via the first logical path, the third relay device relaying a communication via a second logical path different from the first logical path, the forth relay device being arranged in a stage preceding the third relay device and being connected to the third relay device via the second logical path, and the fifth relay device being arranged in a stage succeeding the third relay device and being connected to the third relay device via the second logical path, a target relay device among the plurality of relay devices including:
a detection unit (2) that detects a change in a first communication state with the first relay device or a change in a second communication state between the target relay device and the second relay device;
a communication state obtaining unit (3) that obtains, from the third relay device, a third communication state between the third relay device and the fourth relay device and a fourth communication state between the third relay device and the fifth relay device; and
a path connection unit (4) that connects the first logical path to the third relay device to create a bypass when the detection unit detects the change in the first communication state or the second communication state and (i) when either the first communication state or the third communication state is abnormal or (ii) when both the first communication state and the third communication state are normal and either or both of the second communication state and the forth communication state is abnormal.

12. The information communication system according to claim 11, wherein
the path connection unit (4) connects the first logical path to the third relay device to create the bypass according to a fifth communication state between the second relay device and the fourth relay device.

13. The information communication system according to claim 12, the first relay device further including:
a processing unit (5) that executes a process for issuing a notification for connecting the first path to the third relay device to create the bypass to the plurality of the relay devices arranged between the storage device and the controller.

14. The information communication system according to claim 13, wherein
a processing unit (5) connects the first logical path to the third relay device to create the bypass according to a notification the bypass sent from the any of the plurality of the relay devices arranged between the storage device and the controller.

15. The information communication system according to claim 12, the first relay device further including:
an information collection request issuance unit (6) that issues, according to the change in the first communication state, an information collection request to cause a sixth relay device arranged in the information communication system to collect a sixth communication state between the sixth relay device and a seventh relay device that is arranged in a stage preceding or succeeding the sixth relay device and
connected to the sixth relay device, when the change in the first communication state is detected.

## Patentansprüche

1. Relaisvorrichtung, die in einem Informationsübertragungssystem verwendet wird, welches mehrere der Relaisvorrichtungen zum Weiterleiten einer Kommunikation zwischen einer Speichervorrichtung, welche Daten speichert, und einer Steuerung, welche auf die Speichervorrichtung zugreift, umfasst, wobei die mehreren Relaisvorrichtungen eine Ziel-Relaisvorrichtung, eine erste Relaisvorrichtung, eine zweite Relaisvorrichtung, eine dritte Relaisvorrichtung, eine vierte Relaisvorrichtung und eine fünfte Relaisvorrichtung umfassen, wobei die erste Relaisvorrichtung in einer Stufe angeordnet ist, die der Ziel-Relaisvorrichtung vorhergeht, und über einen ersten logischen Pfad mit der Ziel-Relaisvorrichtung verbunden ist, wobei die zweite Relaisvorrichtung in einer Stufe angeordnet ist, die der Ziel-Relaisvorrichtung folgt, und über den ersten logischen Pfad mit der Ziel-Relaisvorrichtung verbunden ist, wobei die dritte Relaisvorrichtung eine Kommunikation über einen zweiten logischen Pfad weiterleitet, der sich von dem ersten logischen Pfad unterscheidet, wobei die vierte Relaisvorrichtung in einer Stufe angeordnet ist, die der dritten Relaisvorrichtung vorhergeht, und über den zweiten logischen Pfad mit der dritten Relaisvorrichtung verbunden ist, und die fünfte Relaisvorrichtung in einer Stufe angeordnet ist, die der dritten Relaisvorrichtung folgt, und über den zweiten logischen Pfad mit der dritten Relaisvorrichtung verbunden ist, wobei die Ziel-Relaisvorrichtung Folgendes umfasst:
eine Erfassungseinheit (2), welche eine Veränderung in einem ersten Kommunikationsstatus zwischen einer Ziel-Relaisvorrichtung und der ersten Relaisvorrichtung oder eine Veränderung in einem zweiten Kommunikationsstatus zwischen der Ziel-Relaisvorrichtung und der zweiten Relaisvorrichtung erfasst;
eine Kommunikationsstatus-Erwerbseinheit (3), welche von der dritten Relaisvorrichtung einen dritten Kommunikationsstatus zwischen der dritten Relaisvorrichtung und einer vierten Relaisvorrichtung und einen vierten Kommunikationsstatus zwischen der dritten Relaisvorrichtung und der fünften Relaisvorrichtung erhält; und
eine Pfadverbindungseinheit (4), welche den ersten logischen Pfad mit der dritten Relaisvorrichtung verbindet, um eine Umgehung zu erzeugen, wenn die Erfassungseinheit (2) die Veränderung in dem ersten Kommunikationsstatus oder dem zweiten Kommunikationsstatus erfasst und (i) wenn entweder der erste Kommunikationsstatus oder der dritte Kommunikationsstatus anomal ist oder (ii) wenn sowohl der erste Kommunikationsstatus als auch der dritte Kommunikationsstatus normal sind und der zweite Kommunikationsstatus und/oder der vierte Kommunikationsstatus anomal sind.

2. Relaisvorrichtung nach Anspruch 1, wobei
die Pfadverbindungseinheit (4) den ersten logischen Pfad gemäß einem fünften Kommunikationsstatus zwischen der ersten Relaisvorrichtung und der vierten Relaisvorrichtung mit dem dritten Relais verbindet.

3. Relaisvorrichtung nach Anspruch 2, wobei die Ziel-Relaisvorrichtung ferner Folgendes umfasst:
eine Verarbeitungseinheit (5), welche ein Verfahren zum Ausgeben einer Meldung zum Verbinden des ersten logischen Pfads mit der dritten Relaisvorrichtung ausführt, um die Umgehung zu den mehreren Relaisvorrichtungen erzeugen, die zwischen dem Speicher und der Steuerung angeordnet sind.

4. Relaisvorrichtung nach Anspruch 3, wobei
eine Verarbeitungseinheit (5) den ersten logischen Pfad gemäß einer Meldung zum Erzeugen der Umgehung mit der dritten Relaisvorrichtung verbindet, die von der einen der mehreren der Relaisvorrichtungen gesendet wird, die zwischen der Speichervorrichtung und der Steuerung angeordnet sind, um die Umgehung zu erzeugen.

5. Relaisvorrichtung nach Anspruch 1, wobei die Ziel-Relaisvorrichtung ferner Folgendes umfasst:
eine Informationsaufnahmeanforderungs-Ausgabeeinheit (6), welche gemäß der Veränderung in dem ersten Kommunikationsstatus eine
Informationsaufnahmeanforderung ausgibt, um zu bewirken, dass eine sechste Relaisvorrichtung, die zwischen dem Speicher und der Steuerung angeordnet ist, einen sechsten Kommunikationsstatus zwischen der sechsten Relaisvorrichtung und einer siebten Relaisvorrichtung aufnimmt, die in einer Stufe angeordnet ist, die der sechsten Relaisvorrichtung vorhergeht oder folgt, und mit der sechsten Relaisvorrichtung verbunden ist, wenn die Veränderung in dem ersten Kommunikationsstatus erfasst wird.

6. Verbindungsverwaltungsverfahren, welches in einer Relaisvorrichtung angewendet wird, die in einem Informationsübertragungssystem verwendet wird, welches mehrere der Relaisvorrichtungen zum Weiterleiten einer Kommunikation zwischen einer Speichervorrichtung, welche Daten speichert, und einer Steuerung, welche auf die Speichervorrichtung zugreift, umfasst, wobei die mehreren Relaisvorrichtungen eine Ziel-Relaisvorrichtung, eine erste Relaisvorrichtung, eine zweite Relaisvorrichtung, eine dritte Relaisvorrichtung, eine vierte Relaisvorrichtung und eine fünfte Relaisvorrichtung umfassen, wobei die erste Relaisvorrichtung in einer Stufe angeordnet ist, die der Ziel-Relaisvorrichtung vorhergeht, und über einen ersten logischen Pfad mit der Ziel-Relaisvorrichtung verbunden ist, wobei die zweite Relaisvorrichtung in einer Stufe angeordnet ist, die der Ziel-Relaisvorrichtung folgt, und über den ersten logischen Pfad mit der Ziel-Relaisvorrichtung verbunden ist, wobei die dritte Relaisvorrichtung eine Kommunikation über einen zweiten logischen Pfad weiterleitet, der sich von dem ersten logischen Pfad unterscheidet, wobei die vierte Relaisvorrichtung in einer Stufe angeordnet ist, die der dritten Relaisvorrichtung vorhergeht, und über den zweiten logischen Pfad mit der dritten Relaisvorrichtung verbunden ist, und die fünfte Relaisvorrichtung in einer Stufe angeordnet ist, die der dritten Relaisvorrichtung folgt, und über den zweiten logischen Pfad mit der dritten Relaisvorrichtung verbunden ist, wobei das Verbindungsverwaltungsverfahren Folgendes umfasst:
Erfassen einer Veränderung in einem ersten Kommunikationsstatus zwischen der Zielvorrichtung und der ersten Relaisvorrichtung oder eine Veränderung in einem zweiten Kommunikationsstatus zwischen der Ziel-Relaisvorrichtung und der zweiten Relaisvorrichtung (S11);
Erhalten eines dritten Kommunikationsstatus zwischen der dritten Relaisvorrichtung und einer vierten Relaisvorrichtung und eines vierten Kommunikationsstatus zwischen der dritten Relaisvorrichtung und der fünften Relaisvorrichtung von der dritten Relaisvorrichtung (S17); und
Verbinden eines logischen Pfads mit der dritten Relaisvorrichtung, um eine Umgehung zu erzeugen, wenn die Veränderung in dem ersten Kommunikationsstatus oder dem zweiten Kommunikationsstatus erfasst wird und (i) wenn entweder der erste Kommunikationsstatus oder der dritte Kommunikationsstatus anomal ist oder (ii) wenn sowohl der erste Kommunikationsstatus als auch der dritte Kommunikationsstatus normal sind und der zweite Kommunikationsstatus und/oder der vierte Kommunikationsstatus anomal sind (S17).

7. Verbindungsverwaltungsverfahren nach Anspruch 6, wobei
der erste Pfad gemäß einem fünften Kommunikationsstatus zwischen der ersten Relaisvorrichtung und der vierten Relaisvorrichtung mit der dritten Relaisvorrichtung verbunden wird, um die Umgehung zu erzeugen (S17).

8. Verbindungsverwaltungsverfahren nach Anspruch 7, wobei das Verbindungsverwaltungsverfahren ferner Folgendes umfasst:
Ausgeben einer Meldung zum Verbinden des ersten logischen Pfads mit der dritten Relaisvorrichtung, um die Umgehung zu den mehreren Relaisvorrichtungen zu erzeugen, die zwischen der Speichervorrichtung und der Steuerung angeordnet sind (S13).

9. Verbindungsverwaltungsverfahren nach Anspruch 8, wobei der erste logische Pfad gemäß einer Meldung, die Umgehung zu erzeugen, die von der einen der mehreren der Relaisvorrichtungen gesendet wird, die zwischen der Speichervorrichtung und der Steuerung angeordnet sind, mit der dritten Relaisvorrichtung verbunden wird, um die Umgehung zu erzeugen (S304).

10. Verbindungsverwaltungsverfahren nach Anspruch 6, wobei das Verbindungsverwaltungsverfahren ferner Folgendes umfasst:
Ausgeben einer Informationsaufnahmeanforderung gemäß der Veränderung in dem ersten Kommunikationsstatus, um zu bewirken, dass eine sechste Relaisvorrichtung, die zwischen der Speichervorrichtung und der Steuerung angeordnet ist, einen sechsten Kommunikationsstatus zwischen der sechsten Relaisvorrichtung und einer siebten Relaisvorrichtung aufnimmt, die in einer Stufe angeordnet ist, die der sechsten Relaisvorrichtung vorhergeht oder folgt, und mit der sechsten Relaisvorrichtung verbunden ist, wenn die Veränderung in dem ersten Kommunikationsstatus erfasst wird (S112).

11. Informationsübertragungssystem, umfassend
mehrere Relaisvorrichtungen zum Weiterleiten einer Kommunikation zwischen einer Speichervorrichtung, welche Daten speichert, und einer Steuerung, welche auf die Speichervorrichtung zugreift, wobei die mehreren Relaisvorrichtungen eine Ziel-Relaisvorrichtung, eine erste Relaisvorrichtung, eine zweite Relaisvorrichtung, eine dritte Relaisvorrichtung, eine vierte Relaisvorrichtung und eine fünfte Relaisvorrichtung umfassen, wobei die erste Relaisvorrichtung in einer Stufe angeordnet ist, die der Ziel-Relaisvorrichtung vorhergeht, und über einen ersten logischen Pfad mit der Ziel-Relaisvorrichtung verbunden ist, wobei die zweite Relaisvorrichtung in einer Stufe angeordnet ist, die der Ziel-Relaisvorrichtung folgt, und über den ersten logischen Pfad mit der Ziel-Relaisvorrichtung verbunden ist, wobei die dritte Relaisvorrichtung eine Kommunikation über einen zweiten logischen Pfad weiterleitet, der sich von dem ersten logischen Pfad unterscheidet, wobei die vierte Relaisvorrichtung in einer Stufe angeordnet ist, die der dritten Relaisvorrichtung vorhergeht, und über den zweiten logischen Pfad mit der dritten Relaisvorrichtung verbunden ist, und die fünfte Relaisvorrichtung in einer Stufe angeordnet ist, die der dritten Relaisvorrichtung folgt, und über den zweiten logischen Pfad mit der dritten Relaisvorrichtung verbunden ist, wobei eine Ziel-Relaisvorrichtung unter den mehreren Relaisvorrichtungen Folgendes umfasst:
eine Erfassungseinheit (2), welche eine Veränderung in einem ersten Kommunikationsstatus mit der ersten Relaisvorrichtung oder eine Veränderung in einem zweiten Kommunikationsstatus zwischen der Ziel-Relaisvorrichtung und der zweiten Relaisvorrichtung erfasst;
eine Kommunikationsstatus-Erwerbseinheit (3), welche von der dritten Relaisvorrichtung einen dritten Kommunikationsstatus zwischen der dritten Relaisvorrichtung und einer vierten Relaisvorrichtung und einen vierten Kommunikationsstatus zwischen der dritten Relaisvorrichtung und der fünften Relaisvorrichtung erhält; und
eine Pfadverbindungseinheit (4), welche den ersten logischen Pfad mit der dritten Relaisvorrichtung verbindet, um eine Umgehung zu erzeugen, wenn die Erfassungseinheit die Veränderung in dem ersten Kommunikationsstatus oder dem zweiten Kommunikationsstatus erfasst und (i) wenn entweder der erste Kommunikationsstatus oder der dritte Kommunikationsstatus anomal ist oder (ii) wenn sowohl der erste Kommunikationsstatus als auch der dritte Kommunikationsstatus normal sind und der zweite Kommunikationsstatus und/oder der vierte Kommunikationsstatus anomal sind.

12. Informationsübertragungssystem nach Anspruch 11, wobei
die Pfadverbindungseinheit (4) den ersten logischen Pfad gemäß einem fünften Kommunikationsstatus zwischen der zweiten Relaisvorrichtung und der vierten Relaisvorrichtung mit der dritten Relaisvorrichtung verbindet.

13. Informationsübertragungssystem nach Anspruch 12, wobei die erste Relaisvorrichtung ferner Folgendes umfasst:
eine Verarbeitungseinheit (5), welche ein Verfahren zum Ausgeben einer Meldung zum Verbinden des ersten Pfads mit der dritten Relaisvorrichtung ausführt, um die Umgehung zu den mehreren Relaisvorrichtungen erzeugen, die zwischen der Speichervorrichtung und der Steuerung angeordnet sind.

14. Informationsübertragungssystem nach Anspruch 13, wobei
eine Verarbeitungseinheit (5) den ersten logischen Pfadgemäß einer Meldung zum Erzeugen der Umgehung, die von der einen der mehreren der Relaisvorrichtungen gesendet wird, die zwischen der Speichervorrichtung und der Steuerung angeordnet sind, mit der dritten Relaisvorrichtung verbindet, um die Umgehung zu erzeugen.

15. Informationsübertragungssystem nach Anspruch 12, wobei die erste Relaisvorrichtung ferner Folgendes umfasst:
eine Informationsaufnahmeanforderungs-Ausgabeeinheit (6), welche gemäß der Veränderung in dem ersten Kommunikationsstatus eine
Informationsaufnahmeanforderung ausgibt, um zu bewirken, dass eine sechste Relaisvorrichtung, die in dem Informationsübertragungssystem angeordnet ist, einen sechsten Kommunikationsstatus zwischen der sechsten Relaisvorrichtung und einer siebten Relaisvorrichtung aufnimmt, die in einer Stufe angeordnet ist, die der sechsten Relaisvorrichtung vorhergeht oder folgt, und mit der sechsten Relaisvorrichtung verbunden ist, wenn die Veränderung in dem ersten Kommunikationsstatus erfasst wird.

## Revendications

1. Dispositif de relais utilisé dans un système de communication d'informations qui inclut une pluralité des dispositifs de relais pour relayer une communication entre un dispositif de stockage qui stocke des données et un contrôleur qui accède au dispositif de stockage, la pluralité des dispositifs de relais incluant un dispositif de relais cible, un premier dispositif de relais, un deuxième dispositif de relais, un troisième dispositif de relais, un quatrième dispositif de relais, et un cinquième dispositif de relais, le premier dispositif de relais étant agencé dans un étage précédant le dispositif de relais cible et étant connecté au dispositif de relais cible par le biais d'un premier chemin logique, le deuxième dispositif de relais étant agencé dans un étage successif au dispositif de relais cible et étant connecté au dispositif de relais cible par le biais du premier chemin logique, le troisième dispositif de relais relayant une communication par le biais d'un second chemin logique distinct du premier chemin logique, le quatrième dispositif de relais étant agencé dans un étage précédant le troisième dispositif de relais et étant connecté au troisième dispositif de relais par le biais du second chemin logique, et le cinquième dispositif de relais étant agencé dans un étage successif au troisième dispositif de relais et étant connecté au troisième dispositif de relais par le biais du second chemin logique, le dispositif de relais cible comprenant :
une unité de détection (2) qui détecte une modification au niveau d'un premier état de communication entre un dispositif de relais cible et le premier dispositif de relais, ou une modification au niveau d'un deuxième état de communication entre le dispositif de relais cible et le deuxième dispositif de relais ;
une unité d'obtention d'états de communication (3) qui obtient, à partir du troisième dispositif de relais, un troisième état de communication entre le troisième dispositif de relais et un quatrième dispositif de relais, et un quatrième état de communication entre le troisième dispositif de relais et le cinquième dispositif de relais ; et
une unité de connexion de chemins (4) qui connecte le premier chemin logique au troisième dispositif de relais en vue de créer une dérivation lorsque l'unité de détection (2) détecte la modification au niveau du premier état de communication ou du deuxième état de communication, et (i) lorsque l'un ou
l'autre du premier état de communication et du troisième état de communication est anormal, ou (ii) lorsque, à la fois le premier état de communication et le troisième état de communication, sont normaux, et l'un quelconque ou les deux états parmi le deuxième état de communication et le quatrième état de communication est anormal ou sont anormaux.

2. Dispositif de relais selon la revendication 1, dans lequel
l'unité de connexion de chemins (4) connecte le premier chemin logique au troisième dispositif de relais selon un cinquième état de communication entre le premier dispositif de relais et le quatrième dispositif de relais.

3. Dispositif de relais selon la revendication 2, dans lequel le dispositif de relais cible comporte en outre :
une unité de traitement (5) qui exécute un processus d'émission d'une notification visant à connecter le premier chemin logique au troisième dispositif de relais en vue de créer la dérivation vers la pluralité de dispositifs de relais agencés entre le dispositif de stockage et le contrôleur.

4. Dispositif de relais selon la revendication 3, dans lequel :
une unité de traitement (5) connecte le premier chemin logique au troisième dispositif de relais, en vue de créer la dérivation selon une notification visant à créer la dérivation, envoyée par ledit un dispositif quelconque de la pluralité des dispositifs de relais agencés entre le dispositif de stockage et le contrôleur.

5. Dispositif de relais selon la revendication 1, dans lequel le dispositif de relais cible comporte en outre :
une unité d'émission de demandes de collecte d'informations (6) qui émet, selon la modification au niveau du premier état de communication, une demande de collecte d'informations visant à amener un sixième dispositif de relais agencé entre le dispositif de stockage et le contrôleur à collecter un sixième état de communication entre le sixième dispositif de relais et un septième dispositif de relais qui est agencé dans un étage précédant le ou successif au sixième dispositif de relais et est connecté au sixième dispositif de relais, lorsque la modification au niveau du premier état de communication est détectée.

6. Procédé de gestion de connexions utilisé dans un dispositif de relais utilisé au sein d'un système de communication d'informations qui inclut une pluralité des dispositifs de relais pour relayer une communication entre un dispositif de stockage qui stocke des données et un contrôleur qui accède au dispositif de stockage, la pluralité des dispositifs de relais incluant un dispositif de relais cible, un premier dispositif de relais, un deuxième dispositif de relais, un troisième dispositif de relais, un quatrième dispositif de relais, et un cinquième dispositif de relais, le premier dispositif de relais étant agencé dans un étage précédant le dispositif de relais cible et étant connecté au dispositif de relais cible par le biais d'un premier chemin logique, le deuxième dispositif de relais étant agencé dans un étage successif au dispositif de relais cible et étant connecté au dispositif de relais cible par le biais du premier chemin logique, le troisième dispositif de relais relayant une communication par le biais d'un second chemin logique distinct du premier chemin logique, le quatrième dispositif de relais étant agencé dans un étage précédant le troisième dispositif de relais et étant connecté au troisième dispositif de relais par le biais du second chemin logique, et le cinquième dispositif de relais étant agencé dans un étage successif au troisième dispositif de relais et étant connecté au troisième dispositif de relais par le biais du second chemin logique, le procédé de gestion de connexions comprenant les étapes ci-dessous consistant à :
détecter une modification au niveau d'un premier état de communication entre un dispositif de relais cible et le premier dispositif de relais, ou une modification au niveau d'un deuxième état de communication entre le dispositif de relais cible et le deuxième dispositif de relais (S11) ;
obtenir, à partir du troisième dispositif de relais, un troisième état de communication entre le troisième dispositif de relais et un quatrième dispositif de relais, et un quatrième état de communication entre le troisième dispositif de relais et le cinquième dispositif de relais (S17) ; et
connecter un chemin logique au troisième dispositif de relais en vue de créer une dérivation lorsque la modification au niveau du premier état de communication ou du deuxième état de communication est détectée, et (i) lorsque l'un ou l'autre du premier état de communication et du troisième état de communication est anormal, ou (ii) lorsque, à la fois le premier état de communication et le troisième état de communication, sont normaux, et l'un quelconque ou les deux états parmi le deuxième état de communication et le quatrième état de communication est anormal ou sont anormaux (S17).

7. Procédé de gestion de connexions selon la revendication 6, comportant l'étape ci-dessous consistant à :
connecter le premier chemin logique au troisième dispositif de relais en vue de créer la dérivation selon un cinquième état de communication entre le premier dispositif de relais et le quatrième dispositif de relais (S17).

8. Procédé de gestion de connexions selon la revendication 7, dans lequel le procédé de gestion de connexions comporte en outre l'étape ci-dessous consistant à :
émettre une notification visant à connecter le premier chemin logique au troisième dispositif de relais en vue de créer la dérivation vers la pluralité des dispositifs de relais agencés entre le dispositif de stockage et le contrôleur (S13).

9. Procédé de gestion de connexions selon la revendication 8, dans lequel :
le premier chemin logique au troisième dispositif de relais en vue de créer la dérivation selon une notification visant à créer la dérivation envoyée à partir de l'un quelconque de la pluralité des dispositifs de relais agencés entre le dispositif de stockage et le contrôleur est connecté (S304).

10. Procédé de gestion de connexions selon la revendication 6, dans lequel le procédé de gestion de connexions comporte en outre l'étape ci-dessous consistant à :
émettre, selon la modification au niveau du premier état de communication, une demande de collecte d'informations visant à amener un sixième dispositif de relais agencé entre le dispositif de stockage et le contrôleur à collecter un sixième état de communication entre le sixième dispositif de relais et un septième dispositif de relais qui est agencé dans un étage précédant le ou successif au sixième dispositif de relais, et qui est connecté au sixième dispositif de relais, lorsque la modification au niveau du premier état de communication est détectée (S112).

11. Système de communication d'informations comprenant :
une pluralité des dispositifs de relais pour relayer une communication entre un dispositif de stockage qui stocke des données et un contrôleur qui accède au dispositif de stockage, la pluralité des dispositifs de relais incluant un dispositif de relais cible, un premier dispositif de relais, un deuxième dispositif de relais, un troisième dispositif de relais, un quatrième dispositif de relais, et un cinquième dispositif de relais, le premier dispositif de relais étant agencé dans un étage précédant le dispositif de relais cible et étant connecté au dispositif de relais cible par le biais d'un premier chemin logique, le deuxième dispositif de relais étant agencé dans un étage successif au dispositif de relais cible et étant connecté au dispositif de relais cible par le biais du premier chemin logique, le troisième dispositif de relais relayant une communication par le biais d'un second chemin logique distinct du premier chemin logique, le quatrième dispositif de relais étant agencé dans un étage précédant le troisième dispositif de relais et étant connecté au troisième dispositif de relais par le biais du second chemin logique, et le cinquième dispositif de relais étant agencé dans un étage successif au troisième dispositif de relais et étant connecté au troisième dispositif de relais par le biais du second chemin logique, un dispositif de relais cible parmi la pluralité de dispositifs de relais incluant :
une unité de détection (2) qui détecte une modification au niveau d'un premier état de communication avec le premier dispositif de relais, ou une modification au niveau d'un deuxième état de communication entre le dispositif de relais cible et le deuxième dispositif de relais ;
une unité d'obtention d'états de communication (3) qui obtient, à partir du troisième dispositif de relais, un troisième état de communication entre le troisième dispositif de relais et un quatrième dispositif de relais, et un quatrième état de communication entre le troisième dispositif de relais et le cinquième dispositif de relais ; et
une unité de connexion de chemins (4) qui connecte le premier chemin logique au troisième dispositif de relais en vue de créer une dérivation lorsque l'unité de détection détecte la modification au niveau du premier état de communication ou du deuxième état de communication, et (i) lorsque l'un ou l'autre du premier état de communication et du troisième état de communication est anormal, ou (ii) lorsque, à la fois le premier état de communication et le troisième état de communication, sont normaux, et l'un quelconque ou les deux états parmi le deuxième état de communication et le quatrième état de communication est anormal ou sont anormaux.

12. Système de communication d'informations selon la revendication 11, dans lequel :
l'unité de connexion de chemins (4) connecte le premier chemin logique au troisième dispositif de relais en vue de créer la dérivation selon un cinquième état de communication entre le deuxième dispositif de relais et le quatrième dispositif de relais.

13. Système de communication d'informations selon la revendication 12, dans lequel le premier dispositif de relais comporte en outre :
une unité de traitement (5) qui exécute un processus d'émission d'une notification visant à connecter le premier chemin logique au troisième dispositif de relais en vue de créer la dérivation vers la pluralité de dispositifs de relais agencés entre le dispositif de stockage et le contrôleur.

14. Système de communication d'informations selon la revendication 13, dans lequel :
une unité de traitement (5) connecte le premier chemin logique au troisième dispositif de relais, en vue de créer la dérivation selon une notification visant à créer la dérivation, envoyée par ledit un dispositif quelconque de la pluralité des dispositifs de relais agencés entre le dispositif de stockage et le contrôleur.

15. Système de communication d'informations selon la revendication 12, dans lequel le premier dispositif de relais comporte en outre :
une unité d'émission de demandes de collecte d'informations (6) qui émet, selon la modification au niveau du premier état de communication, une demande de collecte d'informations visant à amener un sixième dispositif de relais agencé dans le système de communication d'informations à collecter un sixième état de communication entre le sixième dispositif de relais et un septième dispositif de relais qui est agencé dans un étage précédant le ou successif au sixième dispositif de relais et est connecté au sixième dispositif de relais, lorsque la modification au niveau du premier état de communication est détectée.
